Europäisches Patentamt

European Patent Office

Office européen des brevets

(11) Publication number: **0 286 177 B1**

(12) # EUROPEAN PATENT SPECIFICATION

(45) Date of publication of patent specification: **04.03.92**

(51) Int. Cl.⁵: **C08F 210/16**, C08F 210/02, C08L 23/02

(21) Application number: **88200631.5**

(22) Date of filing: **05.04.88**

(54) **Ethylene copolymer.**

(30) Priority: **06.04.87 NL 8700797**
**03.12.87 NL 8702902**

(43) Date of publication of application:
**12.10.88 Bulletin 88/41**

(45) Publication of the grant of the patent:
**04.03.92 Bulletin 92/10**

(84) Designated Contracting States:
**AT BE CH DE ES FR GB IT LI NL SE**

(56) References cited:
**EP-A- 0 109 779**
**EP-A- 0 141 597**
**GB-A- 2 066 274**

(73) Proprietor: **STAMICARBON B.V.**
**Mijnweg 1**
**NL-6167 AC Geleen(NL)**

(72) Inventor: **Coosemans, Luc Maria Constant**
**Tulpenstraat 194**
**B-3530 Houthalen(BE)**
Inventor: **Mathot, Vincentius Benedictus Franciscus**
**Eugeniahof 13**
**NL-6123 AN Born(NL)**
Inventor: **Tijssen, Johannes**
**Merelstraat 16**
**NL-6176 ES Spaubeek(NL)**

## Description

The invention relates to a polymer comprising at least:
a) 80-95 mole % ethylene
b) 5-20 mole % 1-alkene with 3 to 18 C atoms
c) optionally one or more other monomers,
with a density of at most 901 kg/m$^3$.

Such polymers are known by the name of TAFMER [R]. Their principal application is in mixing with polyalkenes so as to improve certain properties thereof. Thus, for instance, TAFMER [R] is added to polypropylene to improve the low-temperature impact strength, to linear low-density polyethylene (prepared using a transition metal catalyst) to improve the heat-sealability, and to low-density polyethylene (prepared using a radical initiator) to improve the tear and impact strengths.

These applications are important especially to the packaging industry, which uses films made of various materials as well as films consisting of several layers. As a rule the film is first processed into a bag, a bottom being formed by squeezing together two films, which may be connected or not, and exposing them to high temperatures (e.g. 130□C) under pressure, the so-called sealing. The bag is subsequently filled with the goods to be packed, and the top is also sealed.

Film sealing generally is effected by means of heated bars, between which the films are forcefully pressed together, these bars having a temperature of about 120□C to 150□C. When use is made of equipment such as vertical form, fill and sealing machines, the bag is filled with the desired contents while the bottom seal is still hot. Cooling of the seal would entail too long a waiting time, thus lengthening the cycle time and increasing costs.

In view of this it is attempted to keep the waiting time between bag formation and filling as short as possible. This can be achieved only if the hot seal is strong enough to withstand the sudden impact of the bag contents. This strength is designated as hot tack.

In connection with the energy costs and the heating time, it also is desirable for the temperature at which a good seal is formed to be as low as possible, without there being any need to increase the pressure exerted by the heated bars or the sealing time.

Conventional ethylene-1-alkene copolymers (such as TAFMER [R]) have a good hot tack and a low sealing temperature. However, these conventional ethylene-1-alkene copolymers are not suited for use in so-called boil-in-bag applications, in which the sealed bag with its contents (e.g. rice, sausages, etc.) is kept in boiling water for some time, because these copolymers have a low melting point.

A polymer that can be used in these applications is linear low density polyethylene (LLDPE), which has a relatively high melting point. However the sealing temperature of LLDPE is also higher. Such LLDPE's are known from e.g. EP-A-0141597.

The object of the invention is to find a polymer combining the advantages of conventional ethylene-1-alkene copolymers and LLDPE, that is, a polymer with a low sealing temperature and a high temperature stability.

This object is achieved by a polymer comprising at least:
a) 80-95 mole % ethylene
b) 5-20 mole % 1-alkene with 3 to 18 C atoms
c) optionally one or more other monomers,
with a density of at most 901 kg/m$^3$, at least two melting points, one of which is between $(-4x + 100)$□C and $(-4x + 130)$□C, but not above 100□C, and a second one between $(-x + 120)$□C and 135□C, and at least two crystallization points, one of which is between $(-4x + 90)$□C and $(-4x + 120)$□C, but not above 90□C, and a second one between $(-x + 110)$□C and 125□C, x being equal to the total mole percentage of comonomers b) and c), and with a $w^c$ of at least 3% at a temperature of $(-3x + 120)$□C and the $w^c$ at +23□C being at most 0.77x the $w^c$ at -70□C, where

$$w^c = \frac{h_a - h}{h_a - h_c} \cdot 100\%,$$

where $h_a$ represents the theoretical value of the specific enthalphy of 100% amorphous polyethylene, $h_c$ the theoretical value of the specific enthalpy of 100% crystalline polyethylene and h the specific enthalpy of the polymer according to the invention.

The melting and crystallization curves are determined by the Differential Scanning Calorimetry method (DSC) and display melting and crystallization peaks, respectively, at certain temperatures, depending on the polymer. The tops of these peaks are called melting points and crystallization points, respectively. The specific enthalpy of the polymer is calculated by integration of the DSC heating curve.

Polymers according to the invention appear to form a good seal already at relatively low temperatures (e.g. 90¤C), while the hot tack also is very good, and they are resistant to boiling water.

It has, surprisingly, been found that, compared with the conventional ethylene copolymers and LLDPE, polymers according to the invention have very wide melting and crystallization ranges, which means that melting phenomena start to occur already at very low temperatures (-80¤C, in particular -70¤C), and continue up to high temperatures (+140¤C, in particular +135¤C), and that crystallization phenomena start to occur already at very high temperatures (+130¤C, in particular +125¤C), and continue down to very low temperatures (-90¤C, in particular -80¤C). It has also been found that polymers according to the invention have a DSC curve that exhibits both the low melting point(s) of the known ethylene-1-alkene copolymers and the high melting point(s) of the known LLDPE. Possibly this explains why polymers according to the invention combine the advantageous properties of both known polymers.

Polymers with a) 80-95 mole % ethylene, b) 5-20 mole % 1-alkene and c) optionally one or more other monomers, with a density below 901 kg/m$^3$, with at least two melting points, one of which is between (-4x +100)¤C and (-4x +130)¤C, but not above 100¤C, and a second one between (-x +120)¤C and 135¤C, and at least two crystallization points, one of which is between (-4x +90)¤C and (-4x +120)¤e but not above 90¤C and a second one between (-x +110)¤C and 125¤C, x being equal to the total mole percentage of comonomers, and with a w$^c$ of at least 3% at a temperature of (-3x +120)¤C and the w$^c$ at +23¤C being at most 0.77x the w$^c$ at -70¤C, in particular those with a density of at most 900 kg/m$^3$, are to be preferred.

Polymers according to the invention preferably have a density of at least 800 kg/m$^3$, in particular a density of at least 850 kg/m$^3$, and more in particular a density of at least 870 kg/m$^3$, and comonomer incorporation percentages of at most 15, in particular at most 10 mole %.

Polymers according to the invention can be prepared by polymerizing ethylene with the other monomer(s) in the presence of a transition metal catalyst, in particular a Ziegler-Natta catalyst. For this purpose customary catalysts can be used, as described, for instance, in GB-A-1,235,062. However, to effect the recommended high percentages of comonomer incorporation into the polymer molecule, it is recommendable for the catalyst to contain, besides a titanium compound, also a vanadium compound, especially at incorporation percentages of 5 mole % and higher, and in addition also a halogen compound, preferably an organic halide. Preference is given in particular to a catalyst containing a titanium compound, a vanadium compound, an organoaluminium compound, an organic halide and optionally an organomagnesium compound, especially at atomic ratios of $0 \leq Mg/(Ti + V) < 10$, preferably $< 5$, in particular $< 4$, $Al/(Ti + V) \geq 3$, $Al/Mg \geq$, preferably $\geq 3$, $Ti/V \leq 3$, preferably $\leq 2$. The catalyst may contain a second aluminium compound, which is supplied separately to the polymerization vessel. This results in a decrease in comonomer incorporation into the polymer molecule, rendering this type of catalyst better suitable for less high incorporation percentages (e.g. lower than 5 mole %). As titanium compounds, both tetra- and trivalent compounds of the general formula $Ti(OR^1)_{4-n}X^1_n$ and $Ti(OR^2)_{3-m}X^2_m$, respectively, where $R^1$ and $R^2$ are equal or different and represent hydrocarbon residues with 1-20 carbon atoms, $X^1$ and $X^2$ halogen atoms, $0 \leq n \leq 4$ and $0 \leq m \leq 3$, yield good results. Of these compounds, titanic acid esters, such as tetrabutoxytitanium, are to be preferred. It is also possible to apply titanium complexes, such as, for instance, $TiCl_{3.3}$ decanol, TBT.AlCl$_3$, TBT.0.2 Cr(acac)$_2$, TBT.x CrO$_3$ and TBT.x diethylzinc $(0 \leq x \leq 1)$.

As vanadium compounds use can be made of compounds of the general formula $VO(OR^3)_{3-p}X^3_p$, where $R^3$ represents a hydrocarbon residue with 1-20 carbon atoms, $X^3$ a halogen atom and $0 \leq p \leq 3$, in particular vanadyl chloride and/or vanadyl butoxide. It also is possible to use vanadium compounds of the general formula $VX^4_3$ or $VX^4_4$, where $X^4$ represents a halogen atom. $X^4$ preferably is a chlorine atom. Mixtures of titanium compounds or of vanadium compounds also can be used as catalyst components.

The magnesium compounds preferably are organomagnesium compounds and in particular possess at least one hydrocarbon residue bound to the magnesium atom, preferably an alkyl residue. In particular dialkyl magnesium compounds yield a catalyst system having a high activity. The organomagnesium compound may also be complexed with other organometal compounds so as to obtain a soluble product. For this, for instance, organozinc compounds and organoboron compounds, but especially organoaluminium compounds are suitable. Examples of suitable organomagnesium compounds are ethylbutyl magnesium, dibutyl magnesium, and higher dialkyl magnesium compounds, as well as complexes of, for instance, dibutyl magnesium.1/3 triethyl aluminium and the like, or mixtures thereof.

The aluminium compound can be chosen from a large group of compounds, including alkyl siloxalanes.

3

Preference is given to an aluminium compound of the general formula $R^4_qAlX^5_{3-q}$, where the symbols $R^4$ are equal or different and represent a hydrocarbon residue with 1-20 carbon atoms, in particular alkyl, $X^5$ represents a halogen atom, in particular chlorine, and $0 \leq q \leq 3$. Mixtures can also be used.

Further, it is recommendable for the catalyst to also comprise one or more chlorides. These are, for instance, hydrogen chloride, alkyl chlorides, acyl chlorides, inorganic chlorides or combinations thereof. Preference is given to organic chlorides, in particular isopropyl chloride, benzyl chloride, etc.

It is preferred to use a catalyst for which first an organomagnesium compound is contacted with a halogen-containing, in particular a chlorine-containing, compound, before the organomagnesium compound is mixed with the other catalyst components.

In addition, the catalyst may also comprise one or more electron donors (Lewis base). These are preferably added together with one of the other compounds, for instance in the form of tetrabutoxytitanium, tetraisopropoxytitanium and/or vanadyl butylate.

Polymerization can be effected in a way known in itself, both batchwise and continuously. The catalyst components are generally added in such amounts that the amount of titanium in the polymerization medium is 0.001 to 4 mmole/1, preferably 0.005 to 0.5 mmole/1, and more in particular 0.01 to 0.05 mmole/l. Depending on the catalysts used and the monomer(s) to be polymerized, a certain minimum amount of comonomer is to be present in the feed line to the reactor. The molar ratio of comonomer to ethylene will generally be at least 0.15, preferably at least 0.20, in particular at least 0.25.

As comonomer, 1-alkenes with 3 to 18 C atoms are eligible, preferably with 5 to 12 C atoms. Mixtures of these 1-alkenes, in particular combinations of 1-alkenes with 3 or 4 C atoms and 1-alkenes with 5 or more C atoms, also yield good results. In addition, polyunsaturated compounds, such as, for instance, dienes, can be copolymerized.

As dispersant, both in catalyst preparation and in polymerization, use can be made of any liquid that is inert relative to the catalyst system, for instance one or more unsaturated, straight or branched aliphatic hydrocarbons, such as butanes, pentanes, hexanes, heptanes, pentamethylheptane or petroleum fractions such as light or regular-grade gasoline, isopar, naphtha, kerosine, gas oil. Aromatic hydrocarbons, for instance benzene or toluene, can be used, but both because of the cost price and for safety reasons such solvents will generally not be used in technical-scale production. It is therefore preferred to use the cheap aliphatic hydrocarbons, or mixtures thereof, as marketed by the petrochemical industry, as solvent for technical-scale polymerizations. Pretreatments of such solvents, for instance drying or purification, often are necessary. To the average person skilled in the art this will present no problem whatsoever. Cyclic hydrocarbons, such as cyclohexane and decalin, can of course also be used as solvent.

Polymerization preferably is effected at temperatures such that the polymer dissolves in the solvent, in particular at temperatures above 135¤C, especially above 160¤C. For practical considerations the temperature will generally not exceed 300¤C.

The polymer solution obtained in the polymerization can be upgraded in a way known in itself, the catalyst generally being deactivated at some stage of upgrading. Deactivation can be effected in a way known in itself. The activity of the catalysts generally is such that the amount of catalyst in the polymer, notably the transition metal content, is so low that removal of catalyst residues can be done without. Of course, the polymer can, if this is deemed desirable, be subjected to a washing treatment so as to reduce the residual content of catalyst residues even further.

Polymerization can be carried out, discontinuously or continuously, under atmospheric pressure, but also at elevated pressure up to about 1000 bar, or at an even higher pressure. By effecting the polymerization under pressure, the polymer yield can be increased further, which may contribute to the preparation of a polymer with very low contents of catalyst residues.
Polymerization preferably at pressures of 1-200 bar, and more in particular of 10-100 bar.

Pressures in excess of 100 bar soon give rise to technological objections. Pressures that are much higher, of 1000 bar and more, may, however, be used when polymerization is effected in so-called high-pressure reactors.

Modifications known in itself may also be applied. Thus, for instance, the molecular weight can be controlled by addition of hydrogen or other modifiers customarily applied for this purpose. Polymerization can also be effected in several steps, arranged either in parallel or in series, in which, if desired, different catalyst compositions, temperatures, residence times, pressures, hydrogen concentrations, etc., are used. Products with a wide molecular weight distribution, for instance, can be prepared by choosing the conditions in one of the steps, for instance pressure, temperature and hydrogen concentration, such that a polymer with a high molecular weight is formed, while the conditions in another step are chosen such that a polymer with a lower molecular weight is formed.

Polymers according to the invention comprise, besides ethylene, also 1-alkene and optionally other monomers. These 1-alkenes have three to eighteen C atoms. There is advantage in using 1-alkenes that possess five to twelve C atoms, in particular 1-hexene, 1-octene and 4-methyl-1-pentene.

The other monomers need not be present for good results to be obtained. However, if desired one or more other 1-alkenes can be added, such as, for instance, propylene or 1-butylene, so that a terpolymer is formed. This may be advantageous, for replacement of a portion of the more expensive higher 1-alkene with the cheaper propylene or 1-butylene does not have adverse consequences for the properties of the polymer. The optimum proportion depends on the desired properties and can easily be determined by one skilled in the art.

It also is possible for polyunsaturated compounds, for instance dienes (such as 1,9-decadiene), to be present in small or large amounts, or yet other copolymerizable compounds.

Polymers according to the invention have a melt index that preferably is between 0.01 and 200 dg/min, in particular between 0.1 and 100 dg/min.

The polymers may be provided with the usual additives, such as lubricants, stabilizers, anti-blocking agents, etc. in the usual way.

Polymers according to the invention are eminently suitable for application as sealing layer on films. However, they need not necessarily be applied on other layers, but are themselves also suitable for processing into film, which is advantage over the conventional ethylene-1-alkene copolymers. They are suitable also for other applications, notably injection moulding, in the case of polymers according to the invention with a higher melt index (15 dg/min, or 20 or higher).

Polymers according to the invention are also suitable for mixing with other 1-alkene polymers, such as HDPE (high-density polyethylene, $d \geq 940$ kg/m$^3$), LDPE (branched low-density polyethylene, $910$ kg/m$^3 < d < 940$ kg/m$^3$), LLDPE (linear low-density polyethylene, $910$ kg/m$^3 < d < 940$ kg/m$^3$), propylene homo- and/or copolymer, conventional ethylene-propylene copolymers, conventional propylene-butylene copolymers, ethylene vinyl acetate copolymers, other polar and apolar copolymers, terpolymers and the like, in amounts by weight of 1-99%, preferably 5-95 wt. %, and in particular 10-90 wt. %. The mixture may further contain other compounds such as fillers and the like. These mixtures are suitable for a wide variety of applications.

The invention will now be elucidated with reference to some examples, without being restricted thereto.

Conventional ethylene-1-alkene copolymers were prepared according to B.K. Hunter et al., J. Polym. Sci: Polym. Chem. Ed., Vol. 22, 1383-1392 (1984).

Conventional LLDPE was commercially available (Stamylex $^R$).

Ethylene copolymers according to the invention were prepared by carrying out a number of continuous polymerizations in a double-walled 2-litre autoclave. To this end the autoclave was filled entirely with gasoline that had been purified using molecular sieves. In an absorber ethylene and, if desired, hydrogen were dissolved in purified gasoline. The copolymerizations were effected by supplying octene-1, and isopropyl chloride in such an amount that the concentration during the polymerization was 0.10 mmole/l, to the gasoline stream containing ethylene and optionally hydrogen. The reactor temperature was set at 185⌀C by means of the jacket heating of the autoclave and was kept at this value during the polymerization, cooling being applied if necessary. The pressure in the reactor was set so that the reactor remained entirely filled with liquid. The catalyst composition and polymerization conditions are given in Table 1. The catalyst components were premixed during the residence time in the feed lines and pumped into the reactor. (SEAC = sesquiethylaluminium chloride, EBM = ethylbutyl magnesium, TBT = tetrabutyoxytitanium, C8 = 1-octene, C2 = ethylene). The residence time in the reactor was about 10 minutes. The polymer was recovered, stabilized if necessary, dried and analyzed. The melt index M.I. of the polymer, expressed in dg/min, was determined according to ASTM D 1238, cond. E. The density (d), expressed in kg/m$^3$, was measured according to ASTM D 1505. The percentage of monomer incorporation was determined by means of infrared measurement. The polymer properties are given in Table 2.

TABLE 1

| Sample No. | SEAC mmole/l | EBM mmole/l | TBT mmole/l | VOCl$_3$ mmole/l | H$_2$ Nl/h | C$_8$/C$_2$ mole/mole |
|---|---|---|---|---|---|---|
| 1 | 0.45 | 0.09 | 0.04 | - | 0.64 | 0.25 |
| 2 | 0.45 | 0.09 | 0.04 | - | 0.21 | 0.28 |
| 3 | 0.45 | 0.09 | 0.04 | - | - | 0.34 |
| 4 | 0.48 | 0.095 | 0.04 | - | - | 0.39 |
| 5 | 0.50 | 0.10 | 0.04 | - | - | 0.44 |
| 6 | 0.21 | 0.070 | 0.02 | 0.02 | 0.62 | 0.28 |
| 7 | 0.30 | 0.100 | 0.013 | 0.026 | 0.58 | 0.28 |

TABLE 2

| Sample No. | d kg/m$^3$ | MI dg/min | mole % C$_2$ | mole % C$_8$ | melt.p. ¤C | cryst. p. ¤C |
|---|---|---|---|---|---|---|
| 1 | 901.1 | 5.5 | 94.01 | 5.99 | 91,123,124 | 53,82,109 |
| 2 | 897.9 | 4.3 | 93.36 | 6.64 | 92,121,125 | 77,109 |
| 3 | 894.3 | 4.4 | 92.77 | 7.23 | 95,125 | 72,109 |
| 4 | 890.8 | 5.2 | 92.11 | 7.89 | 92,121,125 | 69,109 |
| 5 | 888.1 | 6.9 | 91.46 | 8.54 | 91,121,125 | 70,109 |
| 6 | 895.7 | 6.7 | 92.65 | 7.35 | 80,119,124 | 73,103 |
| 7 | 898.9 | 4.7 | 93.43 | 6.57 | 84,121,125 | 75,107 |

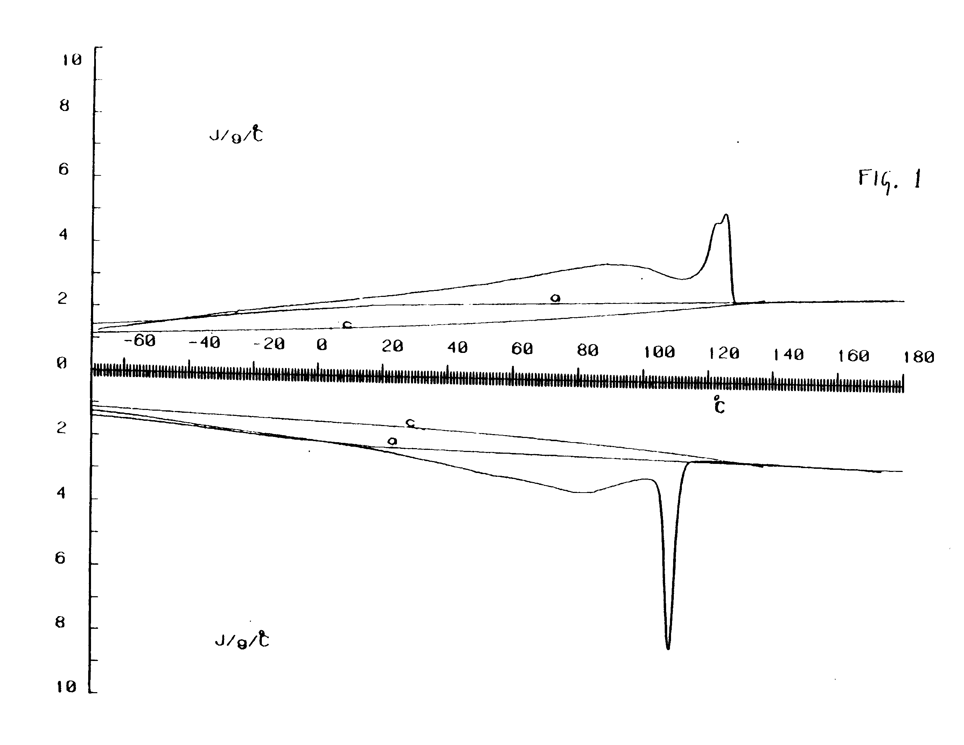

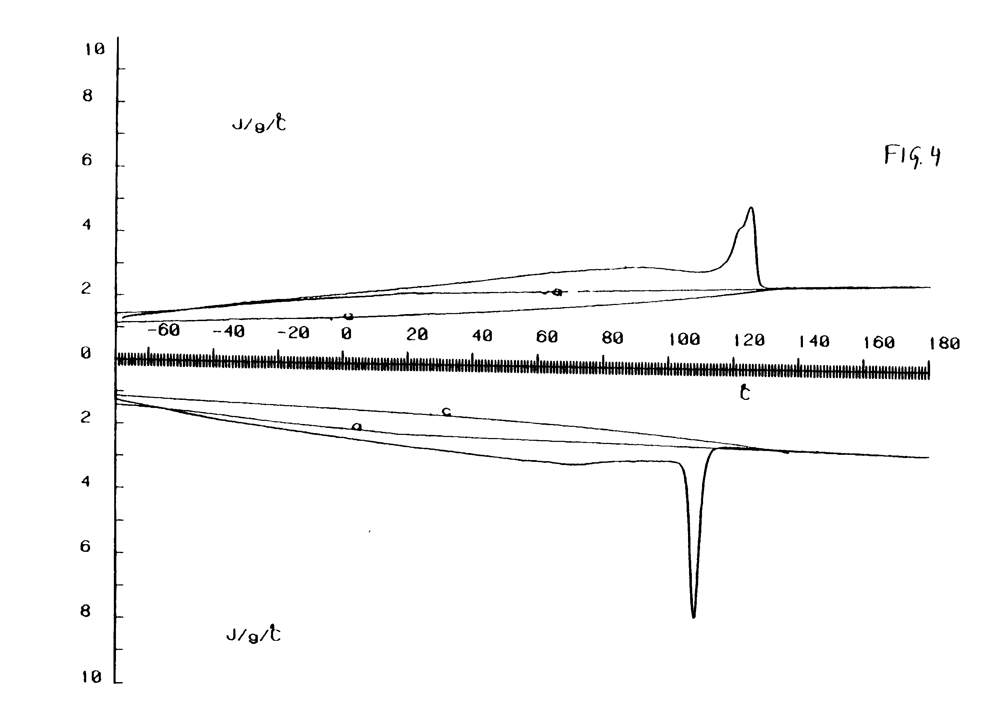

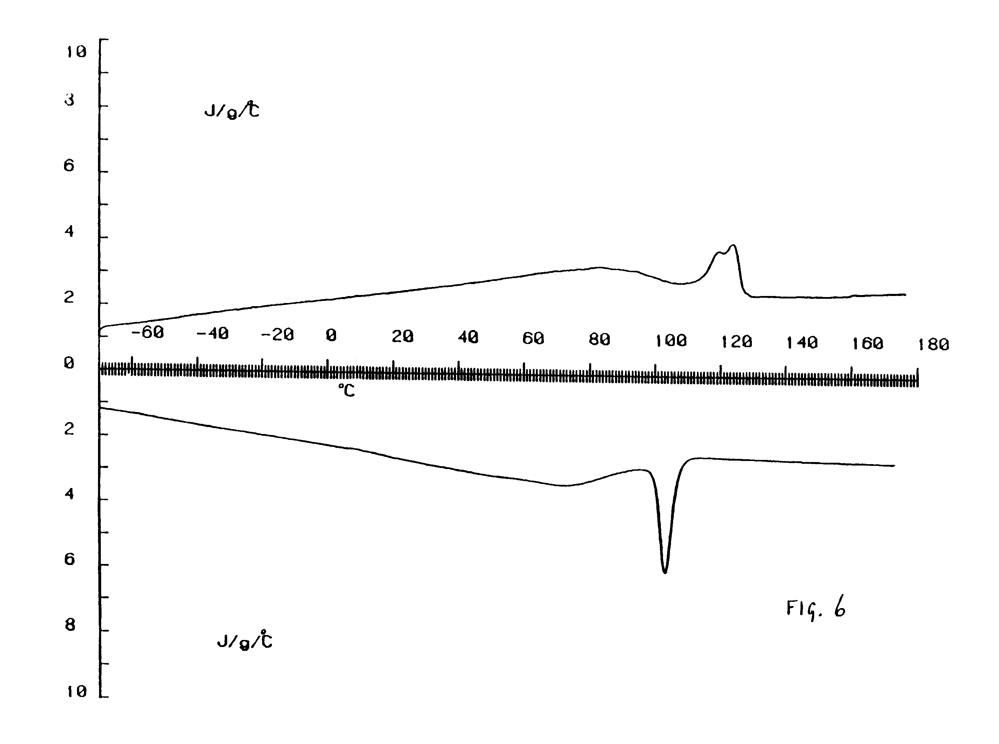

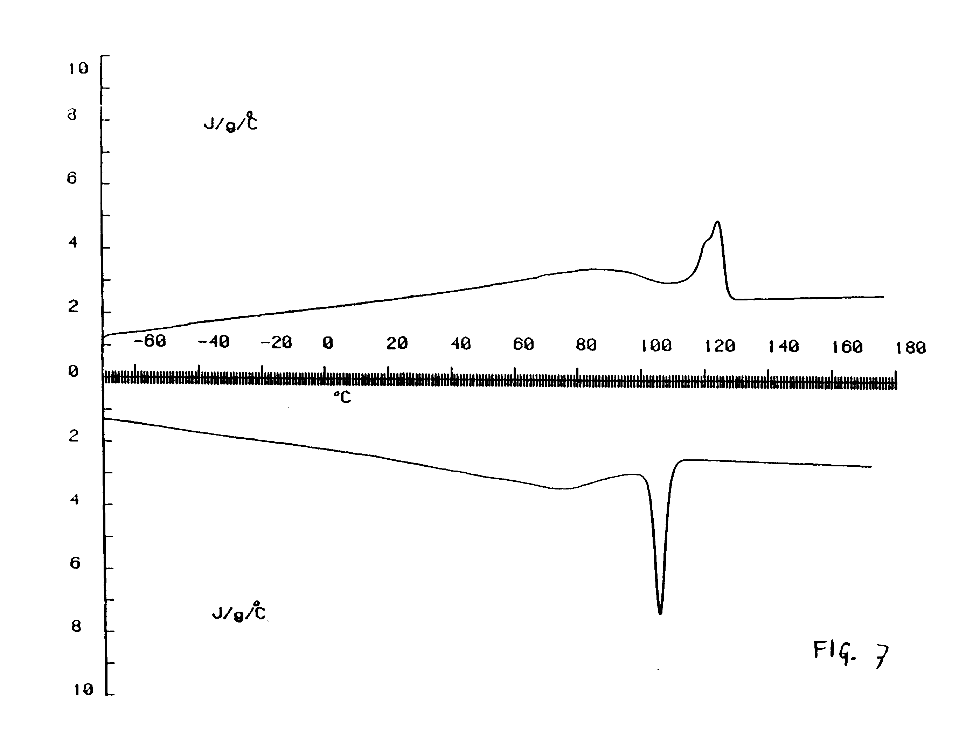

For the DSC measurements of Figs. 1-10 use was made of a measurement set-up comprising a Perkin-Elmer DSC-2, on-line with a Tektronix 4052, a Hewlett-Packard 3495 A scanner-multiplexer, and an HP 3455A digital voltmeter (5 1/2 -6 1/2 digits). The measurements were made according to the "continuous" measuring method of V.B.F. Mathot et al., J. Thermal Anal. Vol. 28, 349-358, (1983).

The scanning rate used was 10¤C/minute. The sample weights varied from 7 to 10 mg, determined to an accuracy of 1 microgramme using a Mettler ME 22/36 electronic microbalance. At each 0.2¤C increment, the measurement value at the temperature reached was recorded and stored in the computer memory used.

The measurements were made under nitrogen after heating to 180¤C, cooling from 180¤C to -70¤C and subsequent heating from -70¤C to 180¤C, with isothermal waiting times at -70¤C and 180¤C of 5 minutes. The curves pertaining to the two last operations, viz. the cooling curve and the (2nd) heating curve, are shown at the bottom and the top, respectively, in Figs. 1-10.

In Figs. 1-10 the temperature is plotted on the horizontal axis, and the specific heat capacity, in J/g/¤C, on the vertical axis. As references, the (theoretical) curves for 100% amorphous (a) and 100% crystalline (c) linear polyethylene, as determined in V.B.F. Mathot, Polymer Vol. 25, 579-599 (1984), are also presented in Figs. 1-5, 8 and 9.

Figs. 1 to 7 inclusive give the DSC curves of samples 1 to 7 inclusive, respectively, of Tables 1 and 2.

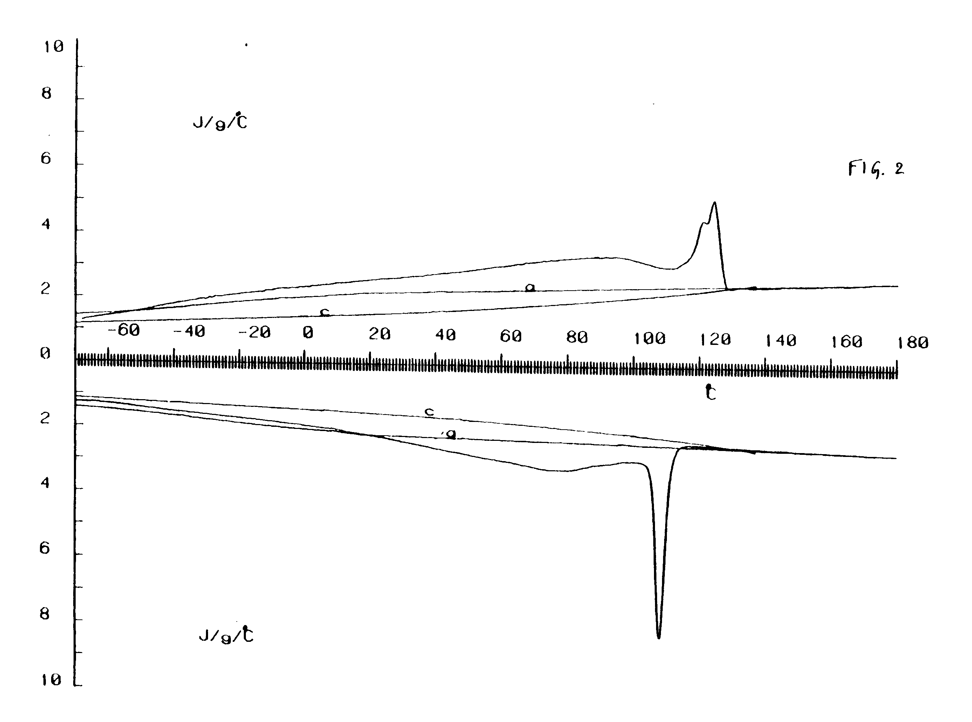

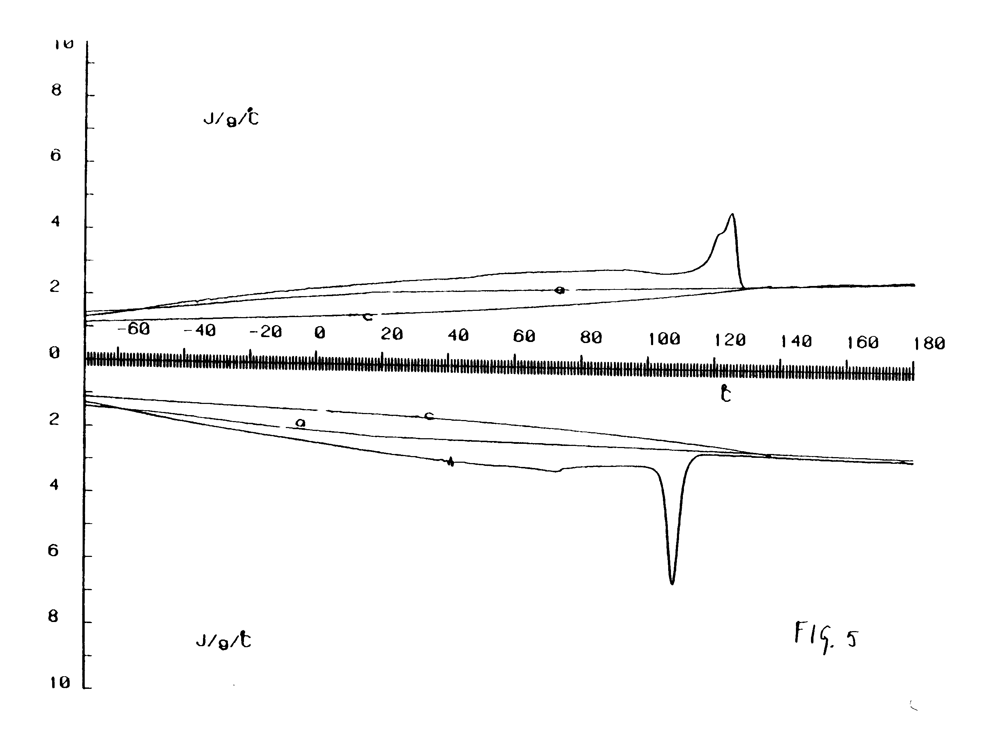

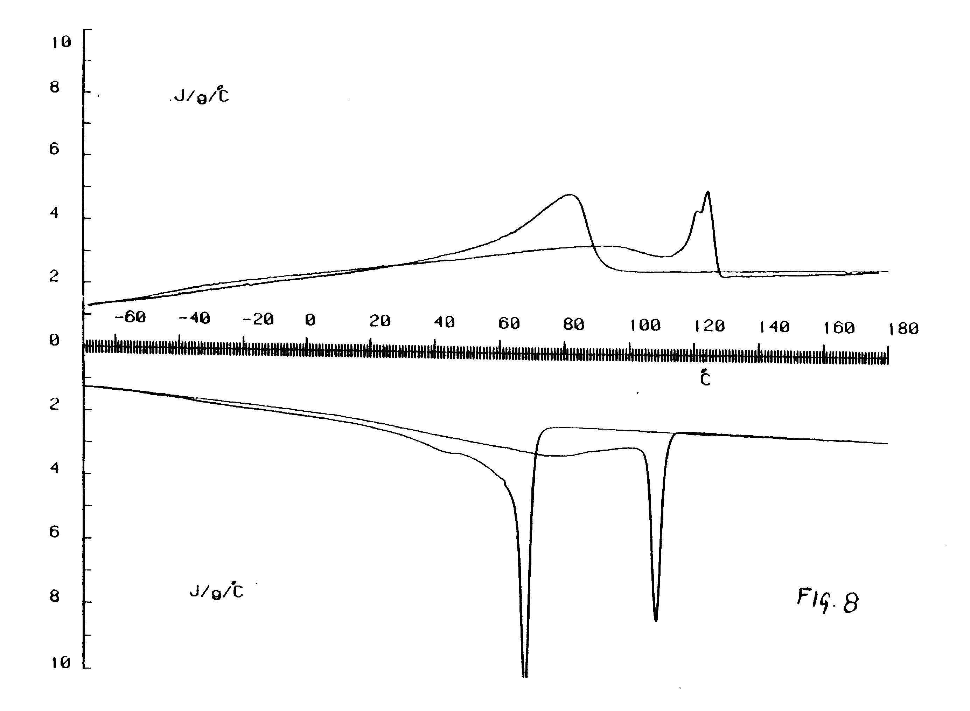

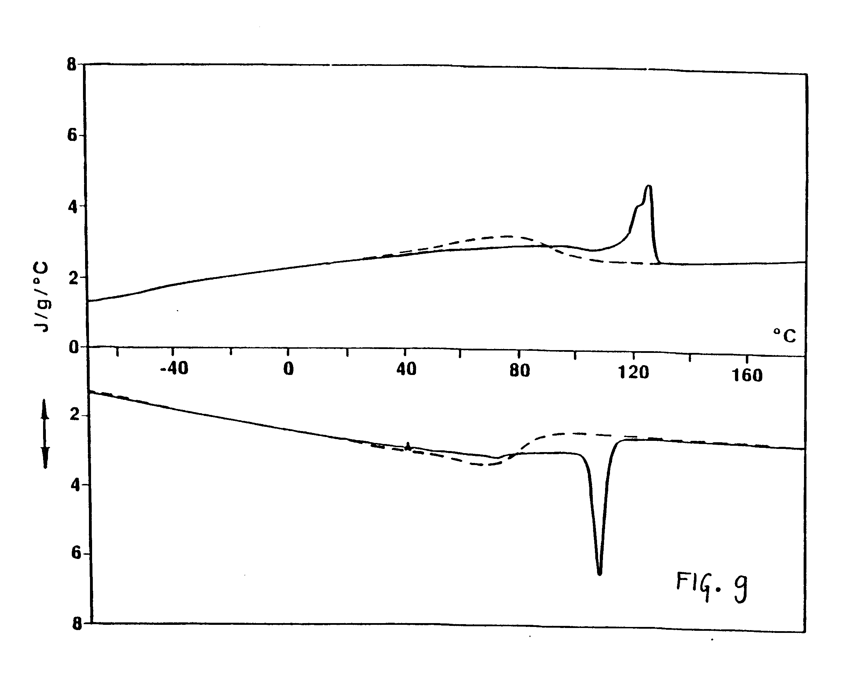

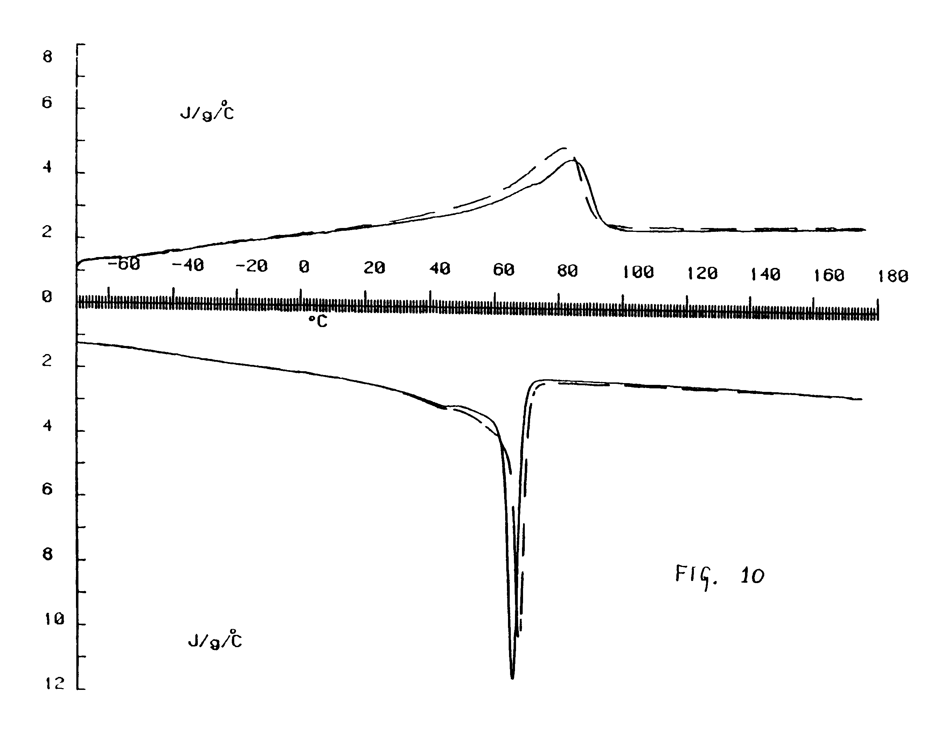

For the sake of comparison, Fig. 8 presents the DSC curve of a conventional ethylene-propylene copolymer with a density of 896.3, an ethylene mole percentage of 89.4 and a propylene mole percentage of 10.6 in comparison with the polymer according to the invention of Fig. 2, which has approximately the same density. Fig. 9 presents, for the purpose of comparison, the DSC curve of a conventional ethylene-octene polymer of 91.9 mole % ethylene and 8.1 mole % octene (dashed line) in comparison with the polymer according to the invention of Fig. 5, which has approximately the same ethylene/octene mole ratio. Fig. 10 gives the DSC curves of the TAFMER-A-4090 ethylene-butene copolymer and the ethylene-propylene copolymer of Fig. 8 (dashed line).

The figures show that determination of especially the lowest peak temperatures becomes more difficult as the percentage of comonomer incorporation increases, there being melting and crystallization ranges rather than melting and crystallization points. This gives an inaccuracy of some degrees.

The width of the temperature ranges in the ethylene copolymers according to the invention is shown more clearly by integrating a DSC heating curve and representing the specific enthalpy curve thus obtained while using the integrated (theoretical) DSC curves of 100% amorphous (a) and 100% crystalline (c) polyethylene as references.

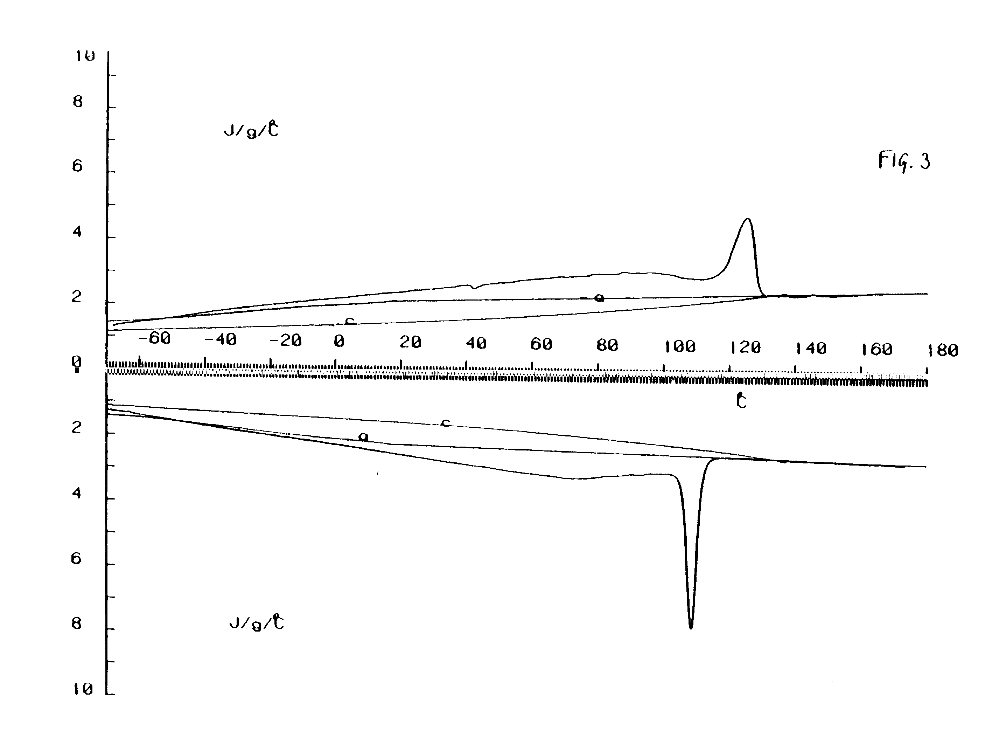

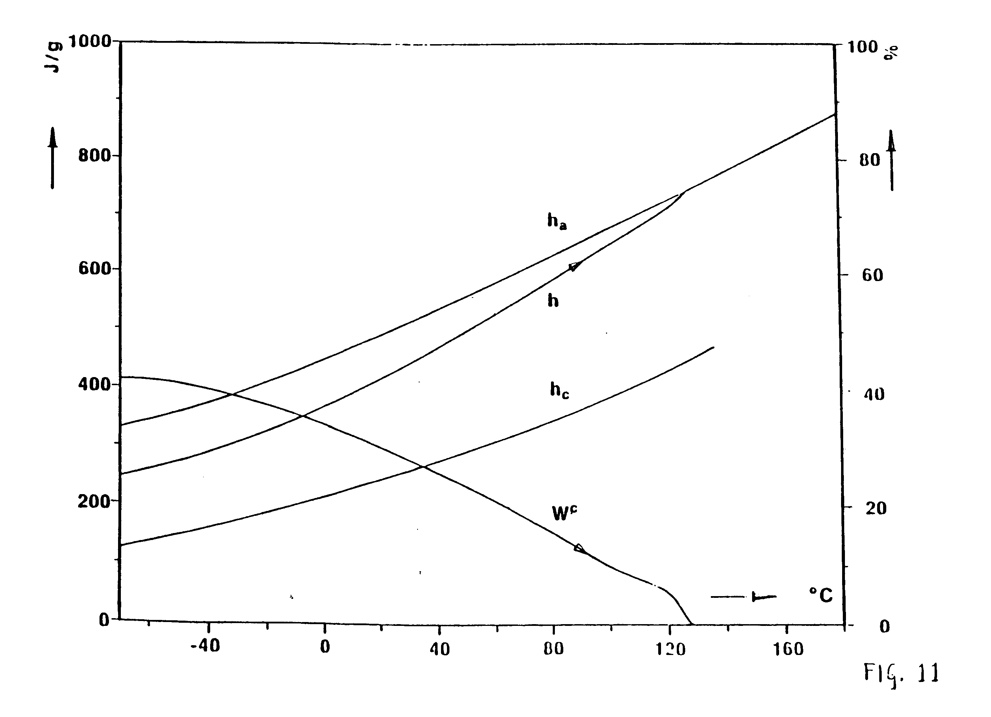

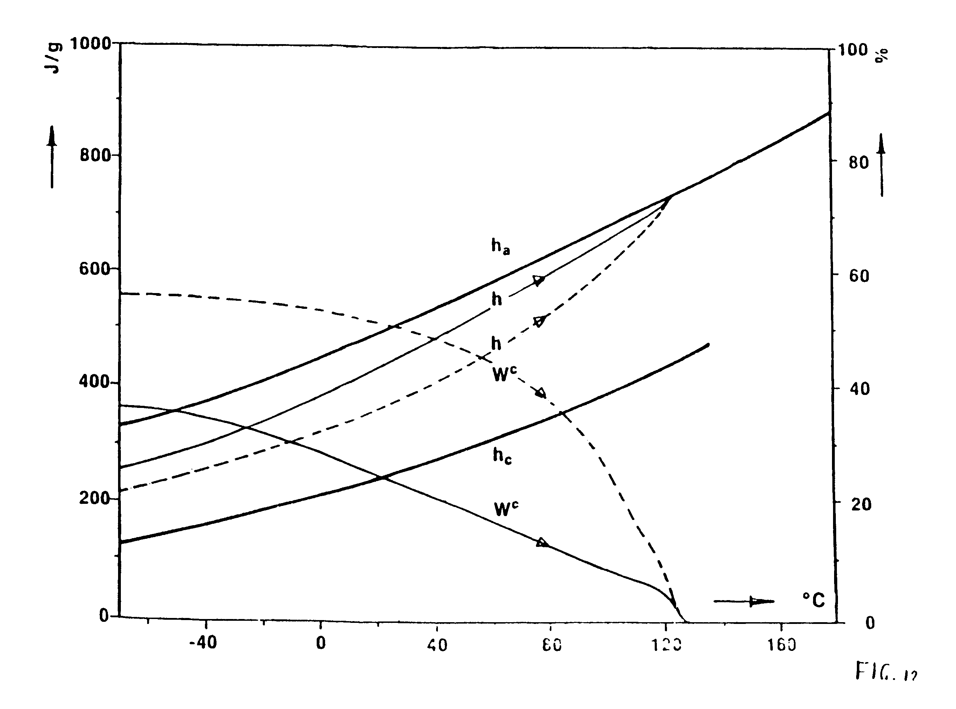

In Fig. 11 this has been done with the DSC heating curve of Fig. 3 and in Fig. 12 with the DSC heating curve of Fig. 5. The horizontal axis gives the temperature in ¤C, and the left-hand vertical axis the specific enthalpy in J/g. At each temperature it can now be seen to what extent the specific enthalpy of the measured polymer deviates from the theoretical reference values. The right-hand vertical axis gives the degree of deviation in % ($w^c$). To this end, at a certain temperature the difference between the values of the "a" curve and the measured curve is divided by the difference between the values of the "a" and "c" curves. The '$w^c$' curve presents the ratios thus obtained, multiplied by 100, according to the formula

$$w^c = \frac{h_a - h}{h_a - h_c} \cdot 100\%,$$

where $h_a$ represents the theoretical value of the specific enthalphy of 100% amorphous polyethylene, $h_c$ the theoretical value of the specific enthalpy of 100% crystalline polyethylene and h the specific enthalpy of the polymer measured. Fig. 12 also includes the integrated DSC heating curve for an octene-LLDPE (d = 919 kg/m$^3$, M.I. = 0.9 dg/min, x = 3.15 mole %), as well as the wc-curve (dashed lines). These curves once again clearly illustrate that for copolymers according to the invention the melting process starts already at the very lowest temperature and does not stop until a remarkably high temperature is reached. It also is visible that the polymer according to the invention will crystallize further on cooling from room temperature.

It also becomes clear that at a temperature of (-3x + 120)¤C according to the indicated measuring method polymers according to the invention are still in part crystalline (wc preferably is 1% or higher, in particular 2% or higher, more in particular 3% or 5% or higher, however, preferably not higher than 40%, in particular not higher than 30%, and in particular not higher than 20%). (Fig. 11: approx. 11.8% at 98.4¤C, Fig. 12: approx. 9.5% at 94.5¤C). This contrasts with the conventional ethylene copolymers, which are no longer crystalline above (-3x + 120)¤C according to the indicated measuring method (wc = 0%). Compared with the conventional LLDPE, the polymers according to the invention differ in the degree to which the crystallinity decreases at very low temperatures. Between, for instance, -70¤C and +23¤C the wc of LLDPE shows almost no decrease, whereas that of polymers according to the invention decreases to a factor of at most 0.87, preferably to a factor of at most 0,83, in particular to a factor of at most 0.77 and more in particular of at most 0.71 (or, in other words, decreases by a factor of at least 1.15, preferably by a factor of at least 1.2, in particular by a factor of at least 1.3, and more in particular by a factor of at least 1.4). This decrease will generally have a lower limit of a factor 0.02, preferably 0.1, in particular 0.2 and more in particular 0.33 (or, in other words, will not exceed a factor of 50, preferably 10, in particular 5 and more in particular 3). For LLDPE (Fig. 12), for instance, the cristallinity decreases to a factor of 0.92 between -70¤C and +23¤C, while ethylene copolymers according to the invention show a decrease to 0.71 (Fig. 11) and 0.67 (Fig. 12), respectively. This illustrates that polymers according to the invention combine the melting behaviour of the conventional ethylene copolymers and LLDPEs.

For further elucidation of the invention the polymer of Fig. 5 was subjected to fractionation. Two types of fractionation were applied: the crystallization-dissolution method (K) and the direct extraction method (D).

In method K 5 gramme of polymer was dissolved in 1.5 litre of xylene at 120¤C and was then made to crystallize out in the non-stirred solution by cooling at a rate below 1¤C per minute down to room temperature. Subsequently, fractions were drained at room temperature (K-1) and after heating at 68¤C (K-2), 91¤C (K-3) and 110¤C (K-4), with yields of 2.95 g (K-1), 0.78 g (K-2), 0.37 g (K-3), 0.35 g (K-4).

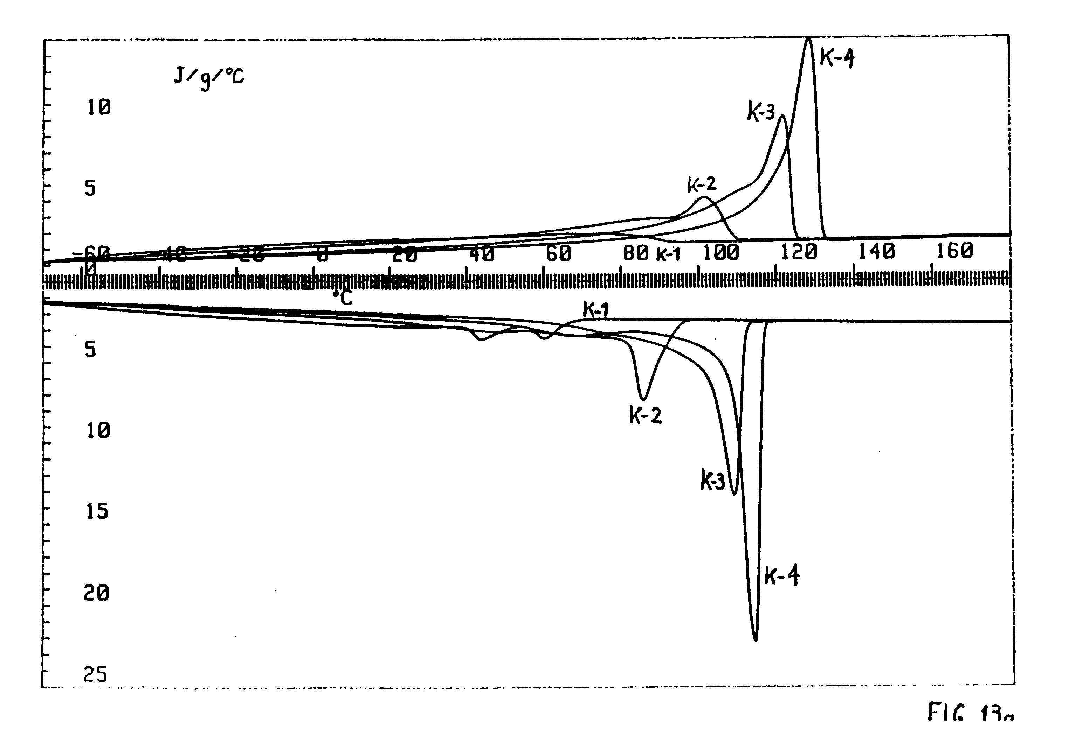

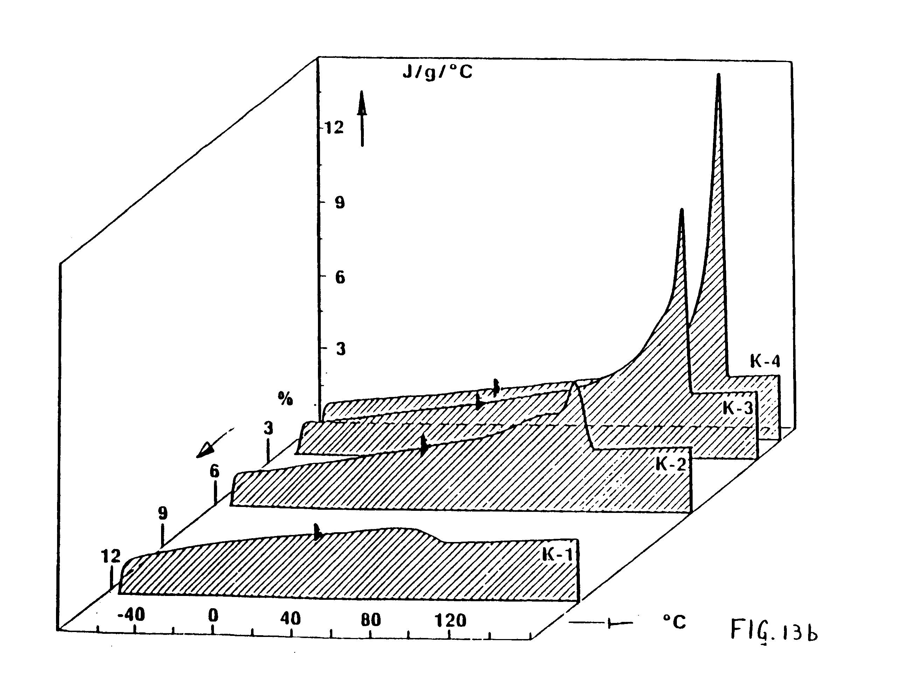

In method D 4.21 g polymer was extracted at 109¤C using a mixture of xylene/ethylene glycol monoethyl ether. By variation of the mixing ratio, 9 fractions were obtained: D-1 (mixing ratio 120 ml/180 ml) yield 250 mg, D-2 (140/160) 315 mg, D-3 (150/150) 380 mg, D-4 (160/140) 428 mg, D-5 (166/134) 608 mg, D-6 (172/128) 510 mg, D-7 (178/122) 462 mg, D-8 (186/114) 527 mg and D-9 (300/0) 481 mg. As antioxidant use was made of 2,6-di-tert.butyl-4-methylphenol. Of the fractions thus obtained the DSC heating and DSC cooling curves were determined as described above for the total polymer. Fig. 13a gives the DSC curves of the K fractions, and Fig. 13b the DSC heating curves, plotted against the molar percentages of comonomer incorporation of the fractions involved. In the first fraction obtained, K-1, the highest melting point is about 90¤C, while in the last fraction obtained, K-4, the highest melting point is higher than 130¤C. This indicates that the polymer according to the invention is heterogeneous and that its heterogeneity is mainly of an intermolecular nature, which means that the copolymer displays the behaviour of a mixture of ethylene copolymer molecules with varying percentages of comonomer incorporation.

This may serve as an explanation for the observation that copolymers according to the invention combine the melting behaviour of the conventional ethylene copolymers and LLDPEs.

Fig. 14 presents the wc curves of fractions K-1 to K-4 inclusive and the wc curve of the copolymer of Fig.5 from which the fractions are obtained (dashed line). This figure once again illustrates the heterogeneous character of the copolymers according to the invention: K-1 has a wc of less than 15% at 23¤C, the other fractions together have a wc of about 45% at 23¤C.

Fig. 15 gives the DSC cooling and the DSC heating curves of Fig. 5 (dashed line), and also the summation of these curves of fractions K-1 to K-5 inclusive (corrected for fraction weights).

The crystallization peak for the fraction with the lowest percentage of comonomer incorporation starts at a higher temperature than the corresponding peak for the starting product. The pertaining melting peak also lies at a higher temperature in comparison with the starting product.

Further, it can be seen that crystallization and melting of the separate fractions is more pronounced.

The total areas between the curves and the 0 J/g/¤C-axis do not differ appreciably.

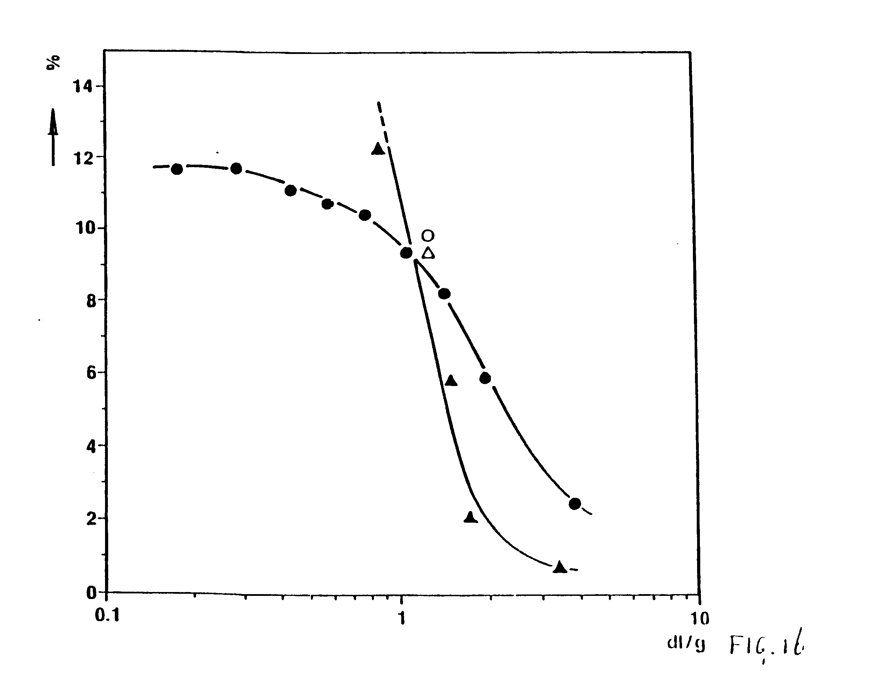

Figure 16 shows the relationship between intrinsic viscosity (proportionally related to molar mass) and comonomer content (in mole %) for fractions K-1 to K-4 inclusive (black triangles).Apart from the variation in comonomer content, a deviating value for the intrinsic viscosity was found, notably for the fraction with the lowest comonomer content, K-4. The intrinsic viscosity was determined in decalin at a temperature of 135¤C. Apparently, the crystallization/dissolution procedure used leads not only to separation according to comonomer content, but also to a certain fractionation on the basis of molar mass. The white triangle represents the non-fractionated polymer of Fig. 5.

Besides the crystallization/dissolution fractionation method, fractionation was also effected using the direct extraction method. This method is known to give good separation according to molar mass. It is indeed apparent that there has been strong fractionation according to intrinsic viscosity (see Figure 16), and thus according to molar mass (black dots; the white dot represents the starting polymer).

It can further be seen that above an intrinsic viscosity of about 1 dl/g, the percentage of comonomer incorporation decreases strongly with increasing viscosity.

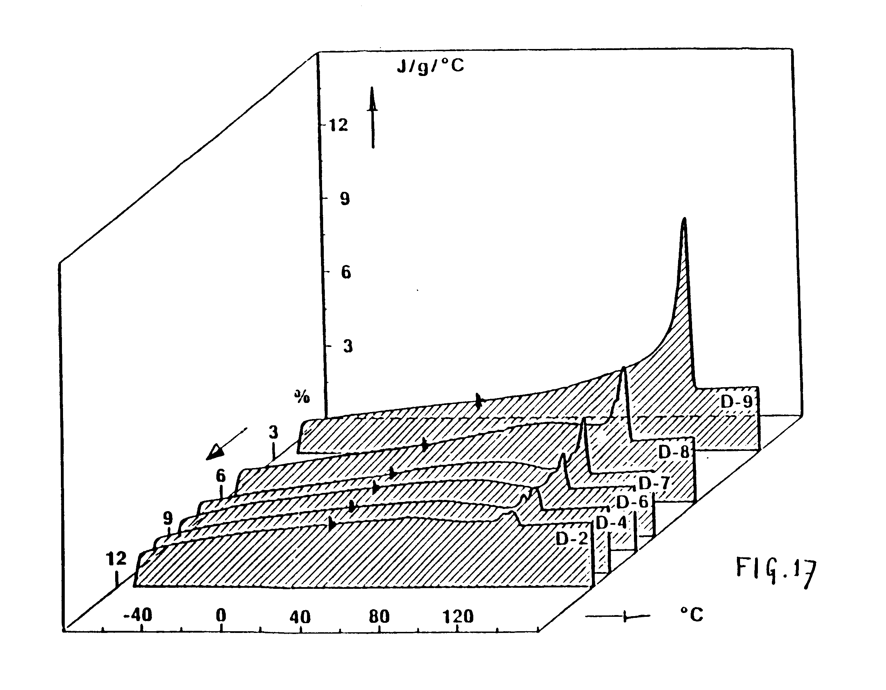

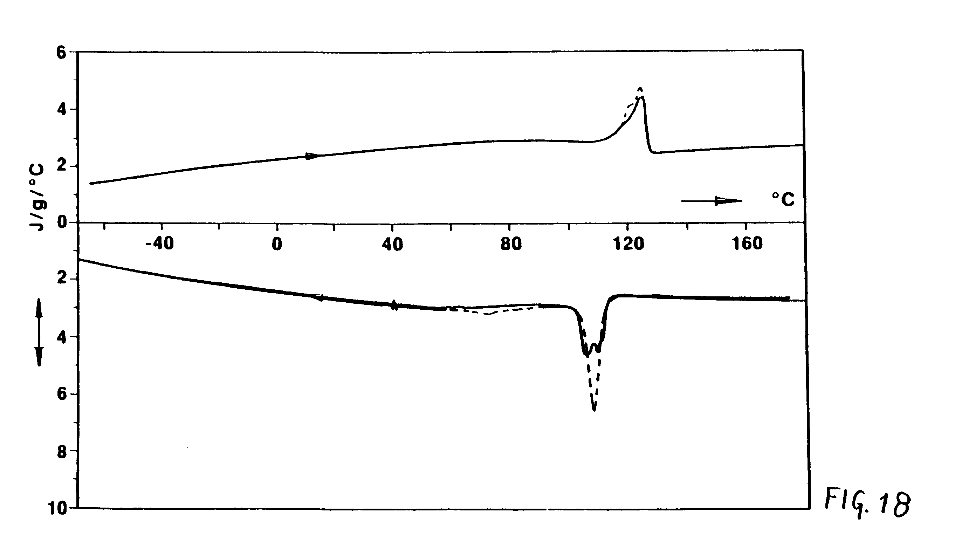

In Figure 17 the DSC heating curves for a number of direct extraction fractions are plotted as a function of the comonomer content. The difference with the results of crystallization/dissolution fractionation (Fig. 13b) is clearly visible; high-melting material is still present also in the fraction with the highest comonomer content, D-2. As in the starting product, for practically all fractions the melting range is very wide and the curves have several peaks. Summation of the DSC curves for the fractions results (Fig. 18) in cooling and heating curves that differ much less from the curves for the starting product (dashed line) than in the case of crystallization/dissolution fractionation.

To further illustrate the copolymers according to the invention, photographs were made by means of SEM: scanning electron microscopy. The electron microscope used is a Philips SEM 505, employing the secondary electron signal at 15 kV accelerating voltage. This signal is amplified by a 200 Å Au/Pd coating applied to the surface to be examined.

A smooth surface was obtained by "trimming" a polymer granule using a Reichert-Jung ultramicrotome at -196¤C (liquid nitrogen). The surface was subsequently etched or extracted to obtain a topographical contrast by the different reactions which the several phases present display to these operations.

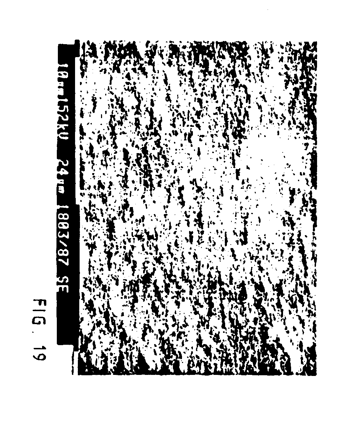

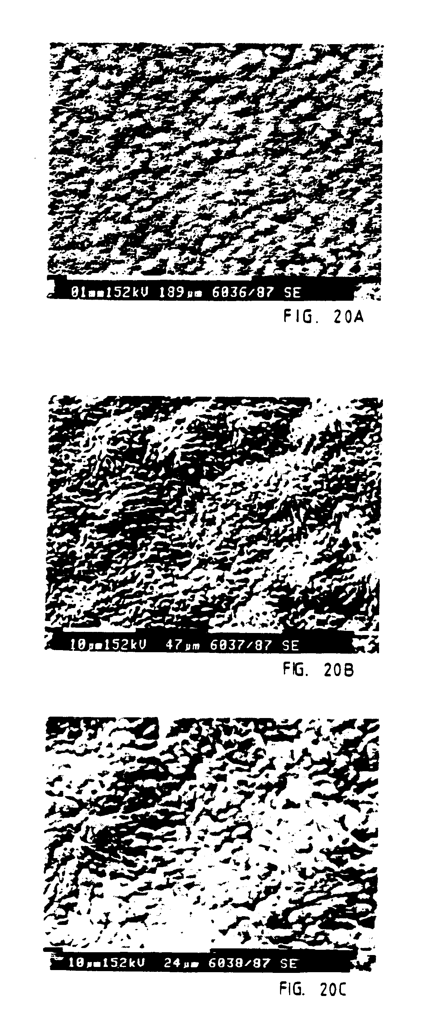

Fig. 19 shows the polymer of Fig. 5, etched with oxygen plasma during 2.5 min. at 5 W. Vague "humps" can be discerned. To get a clearer view of these "humps", the polymer was extracted with xylene at 23¤C during 24 hours. The results of xylene extraction are shown in Fig. 20 with magnifications of, respectively, 520× (a), 2100× (b) and 4200× (c). From these photos it appears that, after extraction, the "humps" seem to be built up of spherical structures interrelated to form a spherulite-like structure.

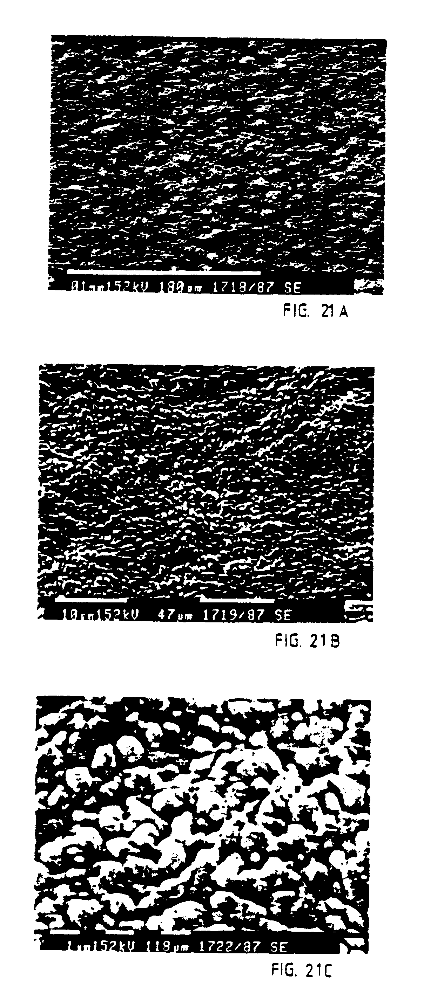

The results of extraction with heptane (2.5 hours, 23¤C) are presented in Fig. 21, with magnifications of, respectively, 540× (a), 2000× (b) and 8500× (c).

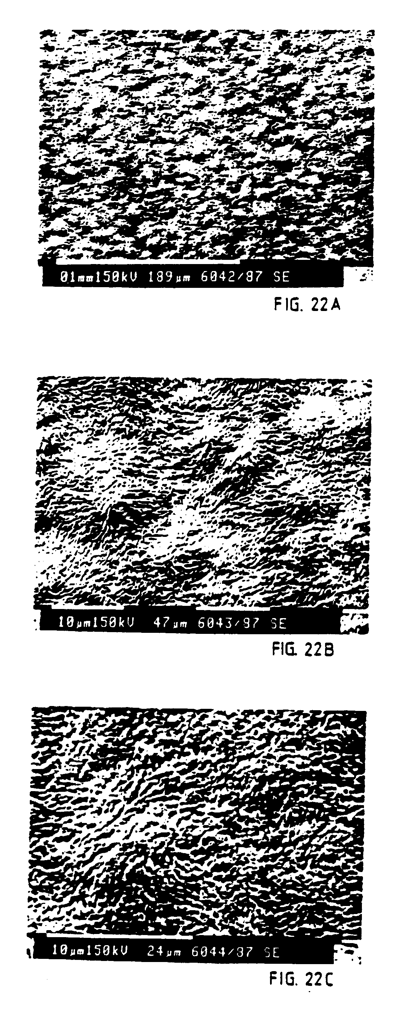

Fig. 22 shows the result of SEM of xylene-extracted polymer of Fig. 1 at magnifications of 520× (a), 2100× (b) and 4200× (c).

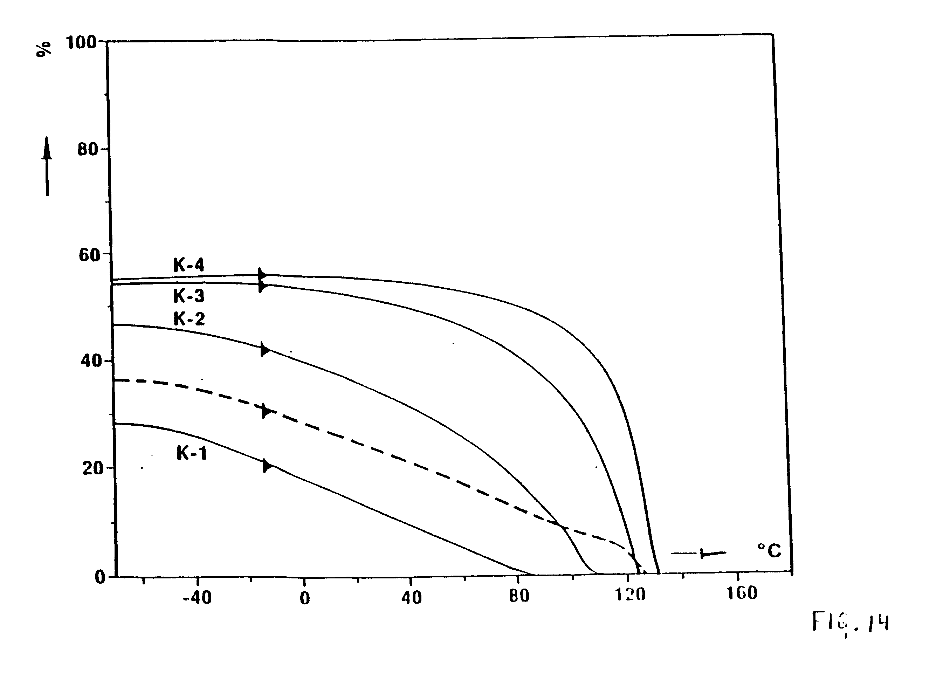

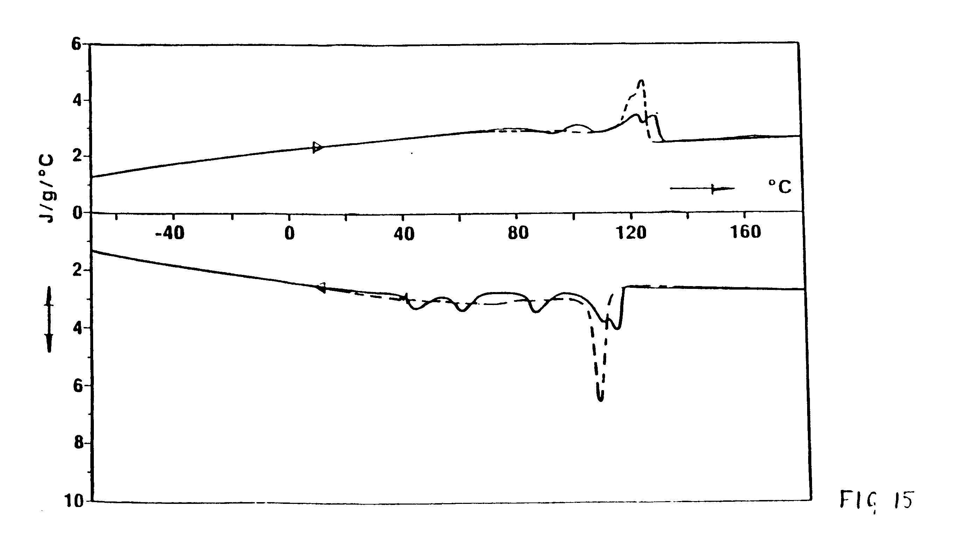

Besides SEM pictures, also TEM (transmission electron microscopy) was employed to examine the polymers according to the invention. Use was made of a Philips EM 420, operated at 100 kV with an objective diaphragm of 15 m in bright field. The incoherent scatter contrast between amorphous and crystalline phase was reinforced by means of staining methods. This involves absorption of the staining media, which contain atoms with a large scattering capacity, by mainly the amorphous phase, which has a lower density than the crystalline phase. The amorphous parts of the polymer will therefore be dark-coloured, while the crystalline parts are lighter. Apart from a contrasting effect, staining media also have a fixing effect, so that the morphology of the polymer remains stable under electron irradiation. Two staining/fixation media were employed: $RuO_4$ and $HCISO_3$. Trimmed polymer samples, obtained as described in the above, were immersed in 0.5% $RuO_4$ solution in an aqueous buffer at room temperature, or in $HCISO_3$ vapour at 45¤C resp. The time during which immersion took place was such as to yield a good contrast. It varied from 16 h for the polymer of Fig. 5 to 36 h for the polymer of Fig. 1 for the $RuO_4$ treatment and from 4 h for the polymer of Fig. 5 to 8 h for the sample of Fig. 1 for the $HCISO_3$ treatment. After this treatment and after washing in acetone, 50-100 nm sections were cut by means of cryo-ultramicrotomy. The $HCISO_3$-stained samples were subsequently treated with uranyl acetate to further increase the contrast.

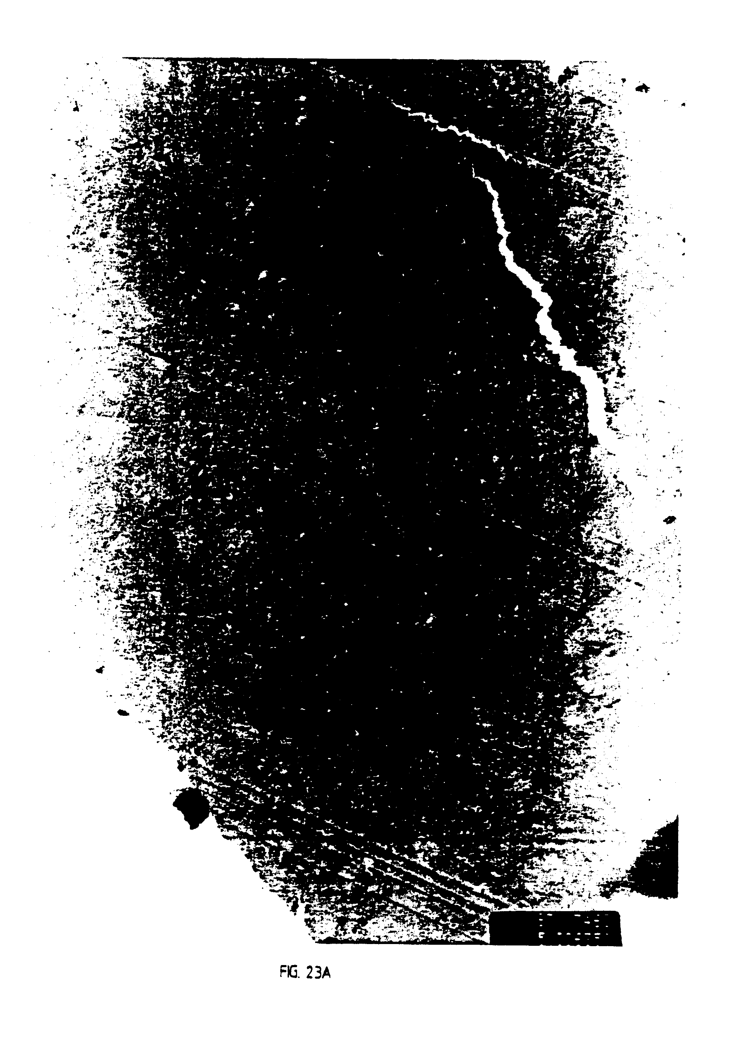

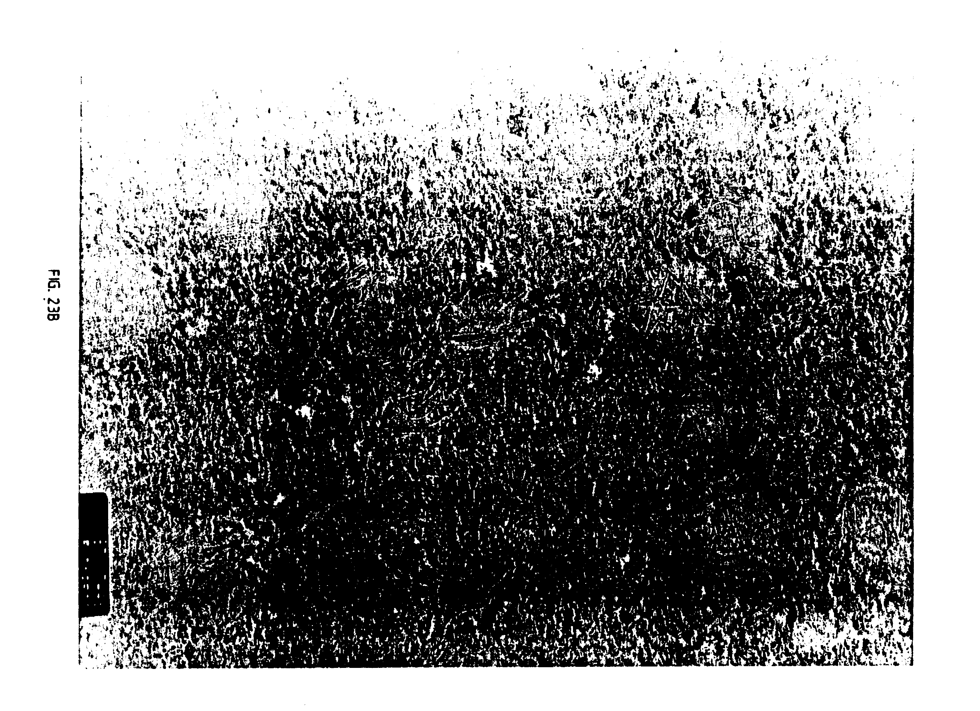

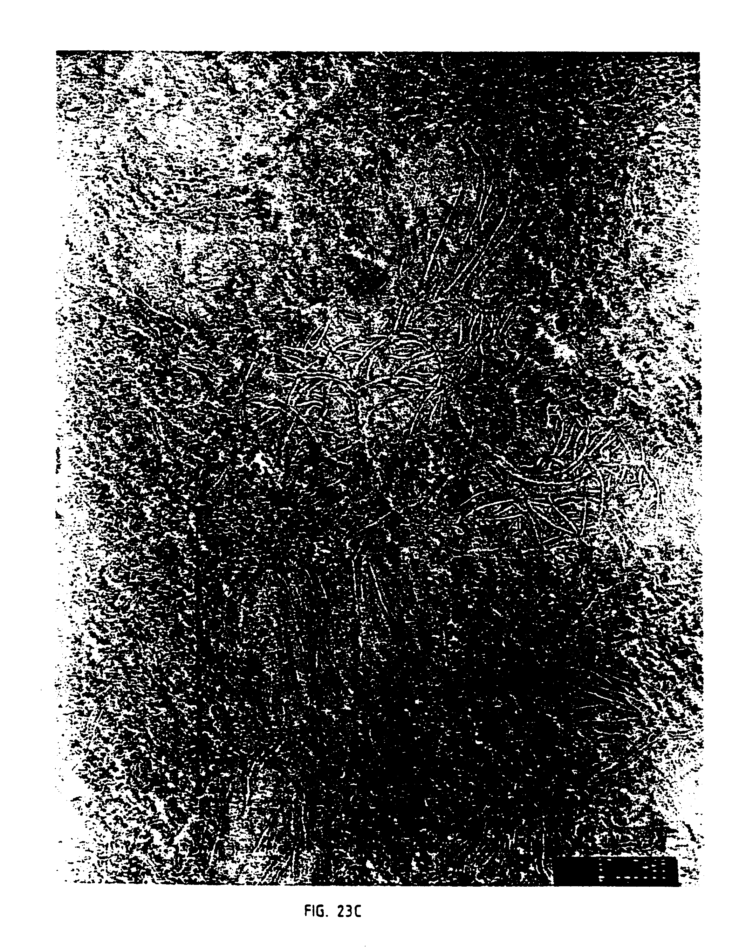

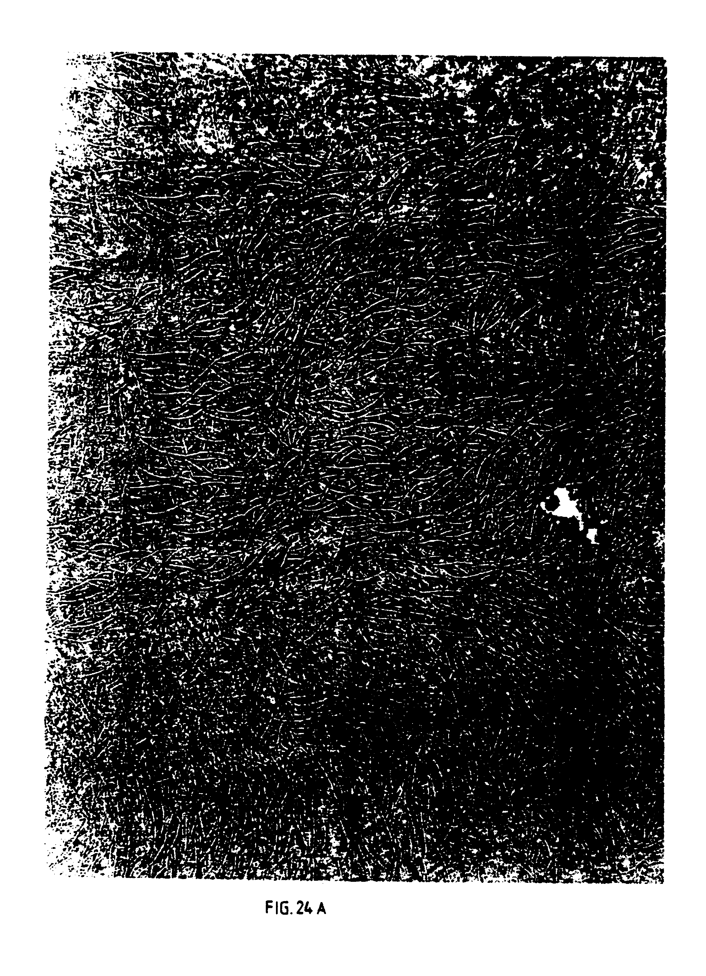

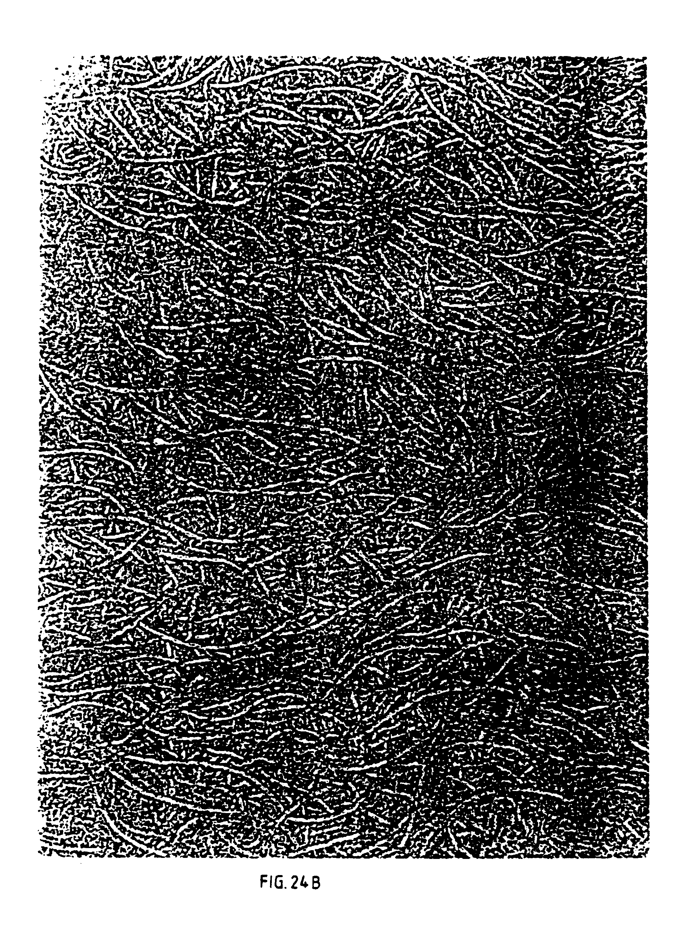

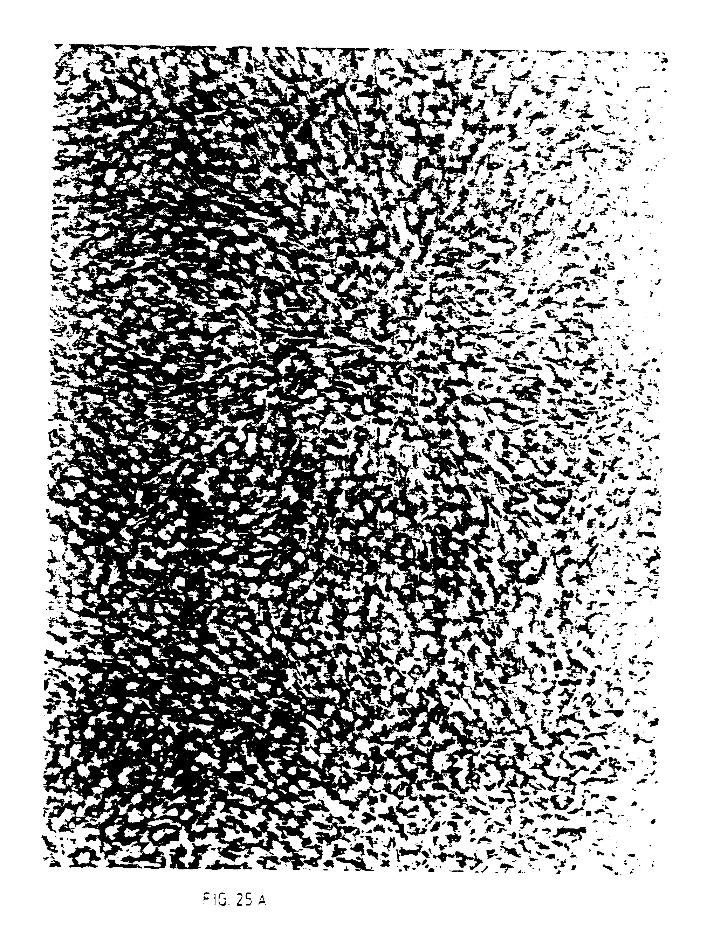

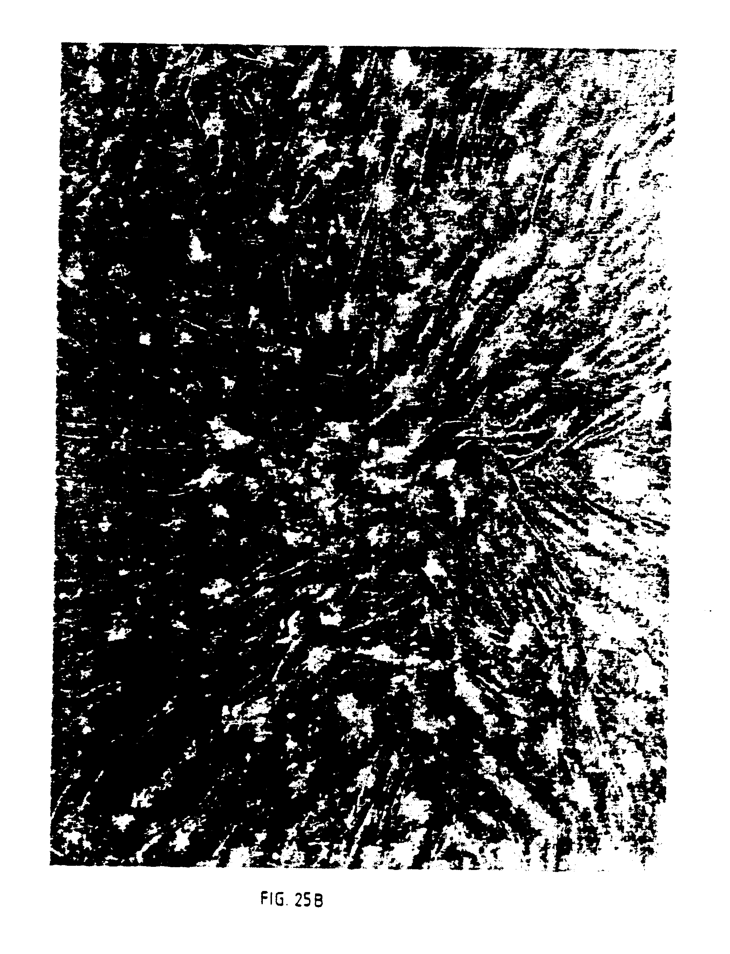

Fig. 23 shows $RuO_4$-stained images of the polymer of Fig. 5 at magnifications of 22,000× (a), 66,000× (b) and 106,000× (c). On further magnification, the light spots in Fig. 23a, which point to the presence of crystalline material, appear to comprise lamellae that are about 9 nm thick and about 0.1-0.4 $\mu$m long. For comparison purposes a photograph has been made (Fig. 24) of conventional LLDPE (d = 919 kg/m$^3$, M.I. = 0.9 dg/min, x = 3.15%), magnifications 57,000× (a) and 150,000× (b), which presents a lamellar picture, showing resemblance to the picture of the crystalline material in Fig. 23.

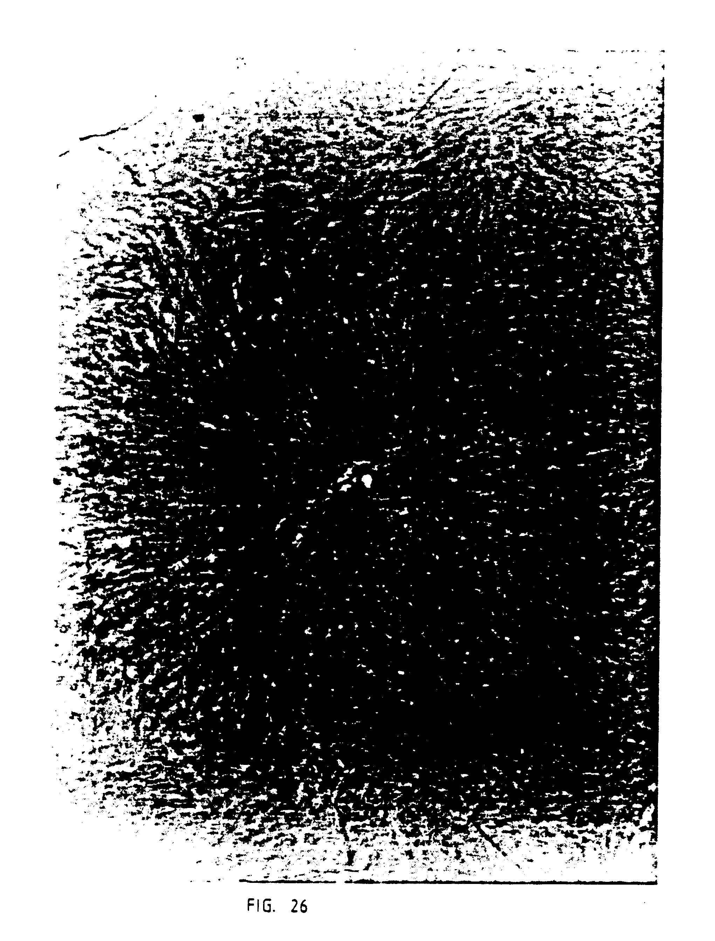

Fig. 25 shows the polymer of Fig. 2, magnifications 10,000× (a) and 32,000× (b), and Fig. 26 the polymer of Fig. 1 (magn. 10,000×).

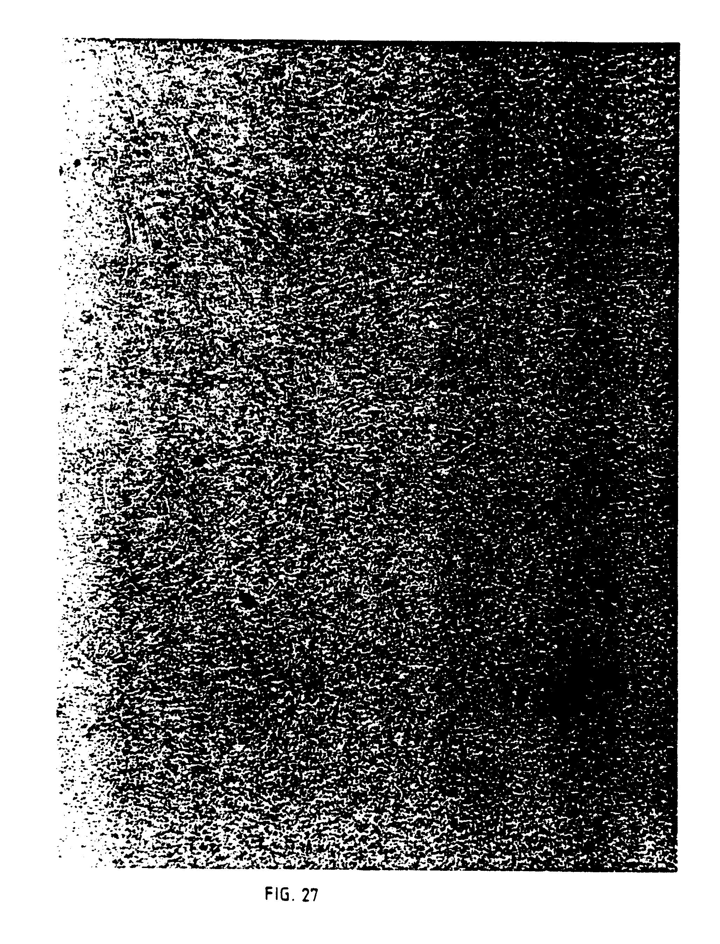

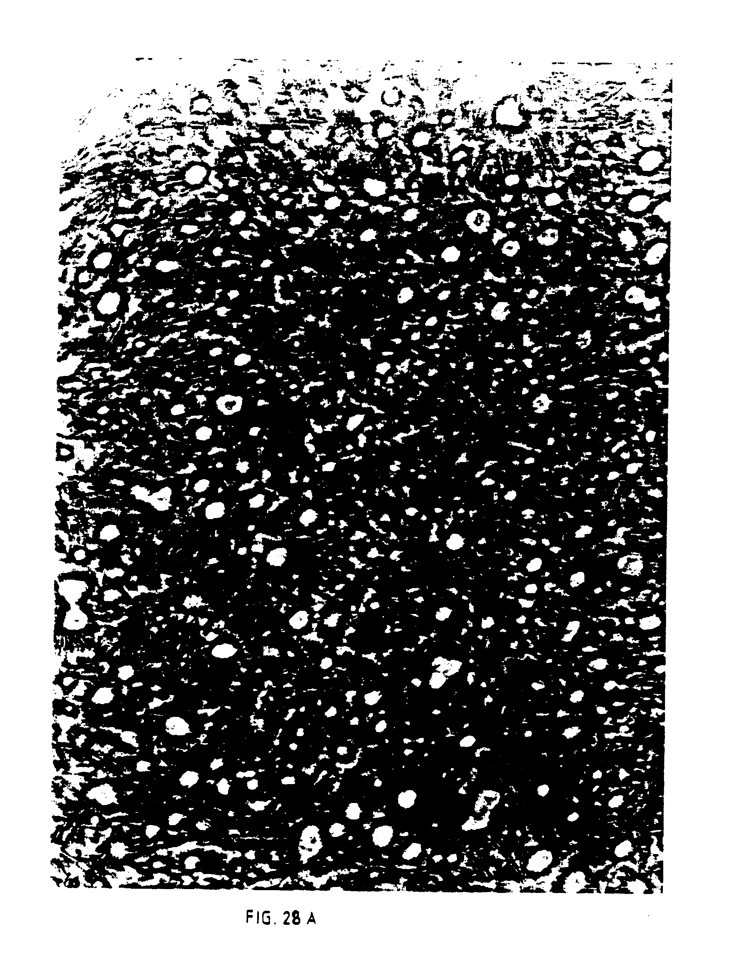

For comparison with Figs. 23 to 26 inclusive, in Fig. 27 the ethylene-octene copolymer of Fig. 9 is shown (magnification 110,000×). This presents a mainly amorphous picture, suggesting that polymers according to the invention have concentrations of LLDPE-like crystalline lamellae situated in a matrix of more amorphous material. When the percentage of comonomer incorporation decreases (Fig. 25), more of these LLDPE-like domains are observed.

Fig. 26 shows a more continuous crystalline phase.

While $RuO_4$ staining as applied here is very suitable for observing the structure of the crystalline concentrations, it is less suitable for observing smaller details. For this purpose, $HCISO_3$ staining is more appropriate, so that both staining techniques are excellent complements. The following figures have all been made with $HCISO_3$ staining.

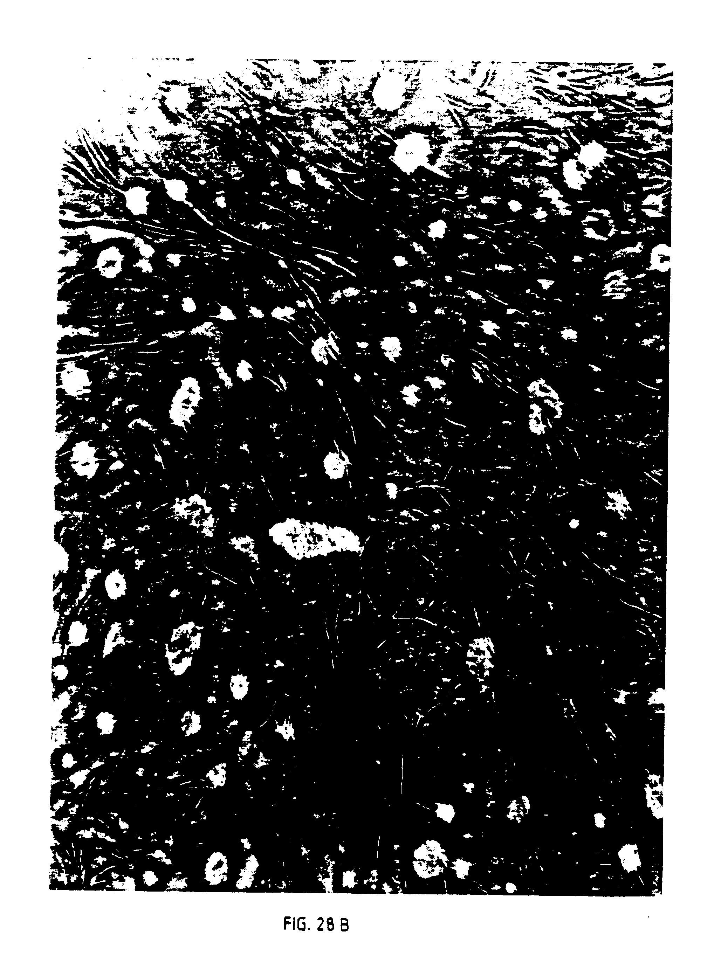

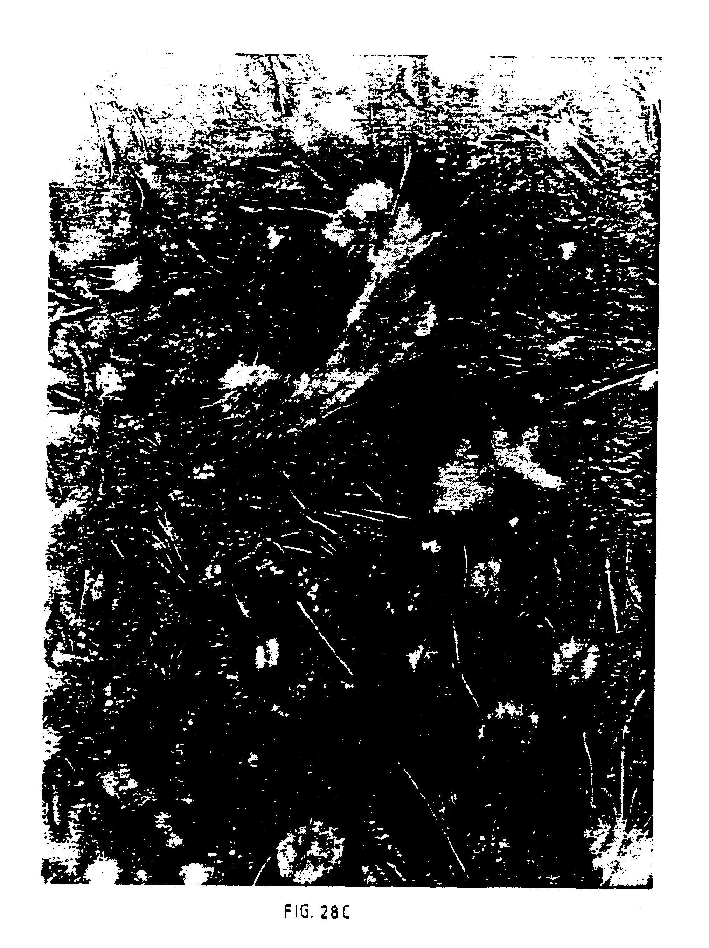

Fig. 28 presents images of the polymer of Fig. 5, at magnifications of 10,000× (a), 20,000× (b), 41,000× (c), 70,000× (d) and 110.000× (e). The lamellae in the more amorphous region, which appear to connect the crystalline concentrations, are thus rendered clearly visible.

These lamellae are about 13-15 nm thick and about 0.8 $\mu$m long. More or less perpendicular to these lamellae, short (about 0.15 $\mu$m) and thin (about 4 nm) lamellae can be distinguished. In between the lamellae, the more amorphous phase of the polymer can be discerned as background.

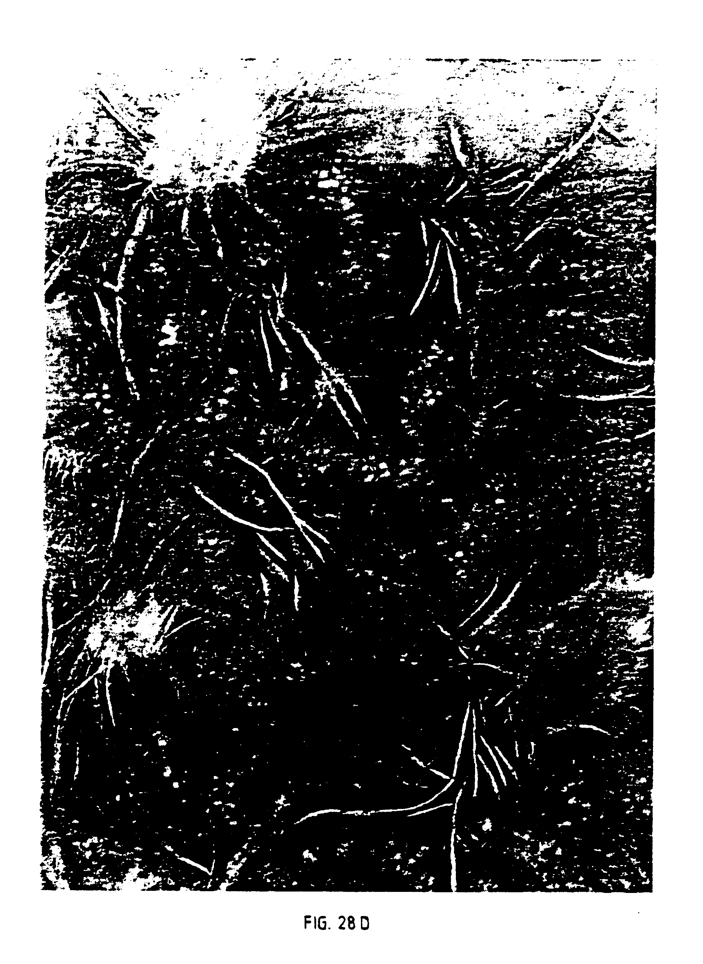

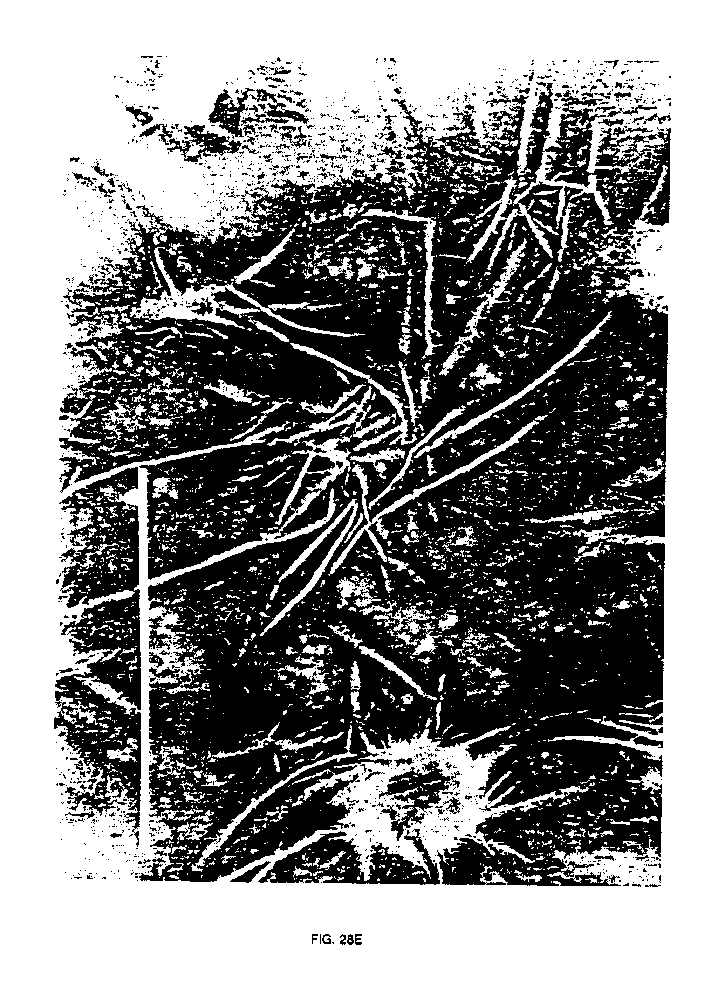

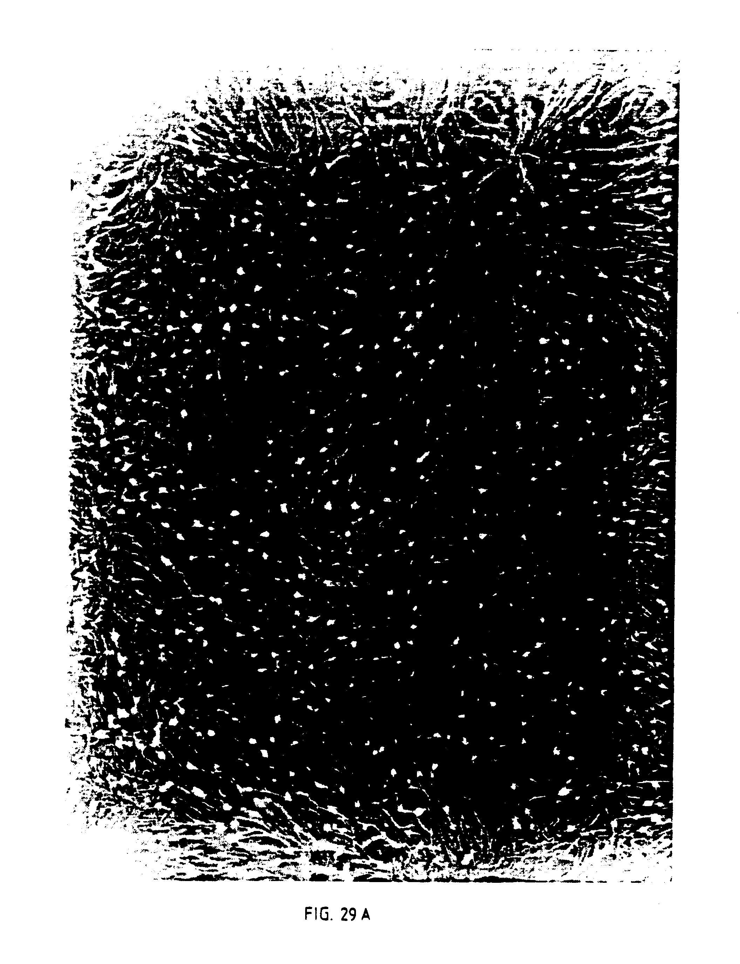

Fig. 29 shows the polymer of Fig. 1 at magnifications of 10,000× (a) and 41,000× (b). The crystalline phase here appears to have become more or less continuous and takes up more space, while the more amorphous phase is no longer continuous and occupies less space. The lamellae in Fig. 29 are longer than the lamellae in Fig. 28 (up to about 2 $\mu$m).

For comparison's sake photographs have also been made of the ethylene-octene copolymer of Fig. 9, and of an LLDPE (d = 919 kg/m$^3$, M.I. = 0.9 dg/min, x = 3.15%).

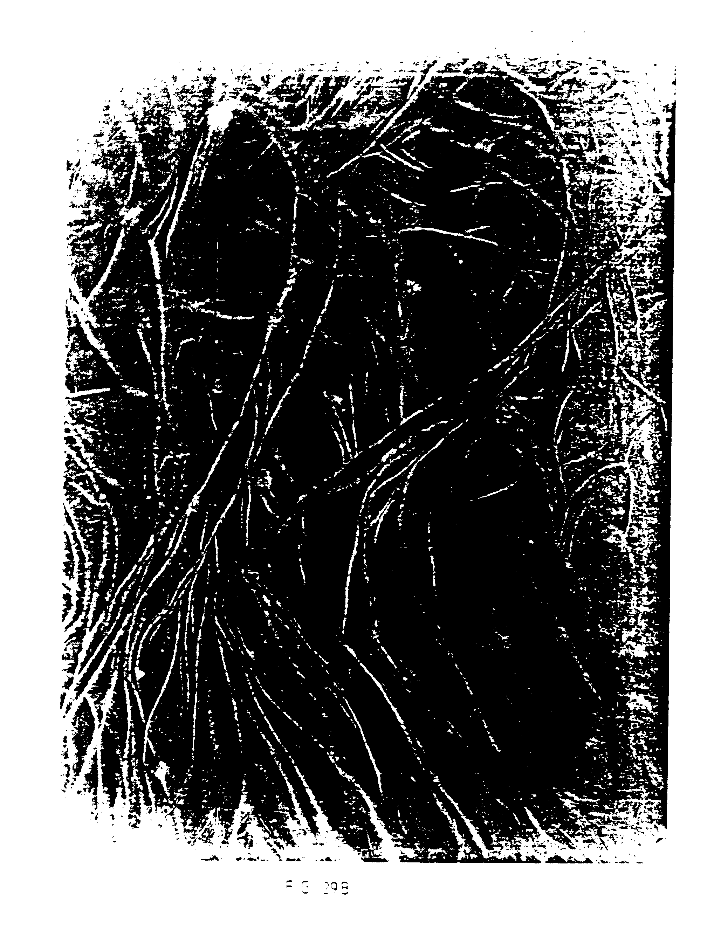

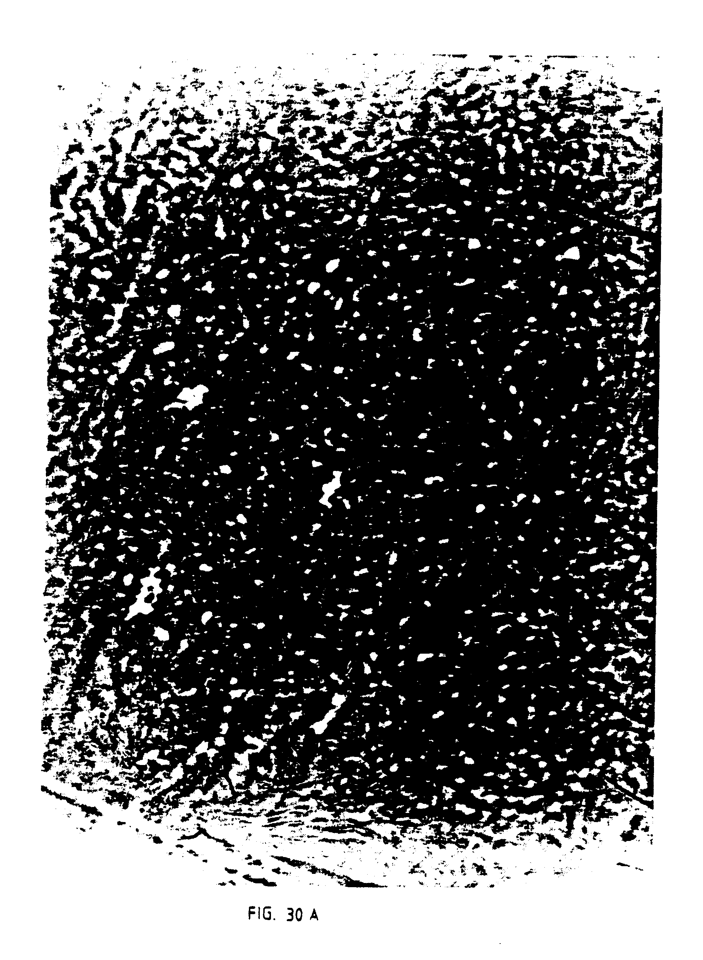

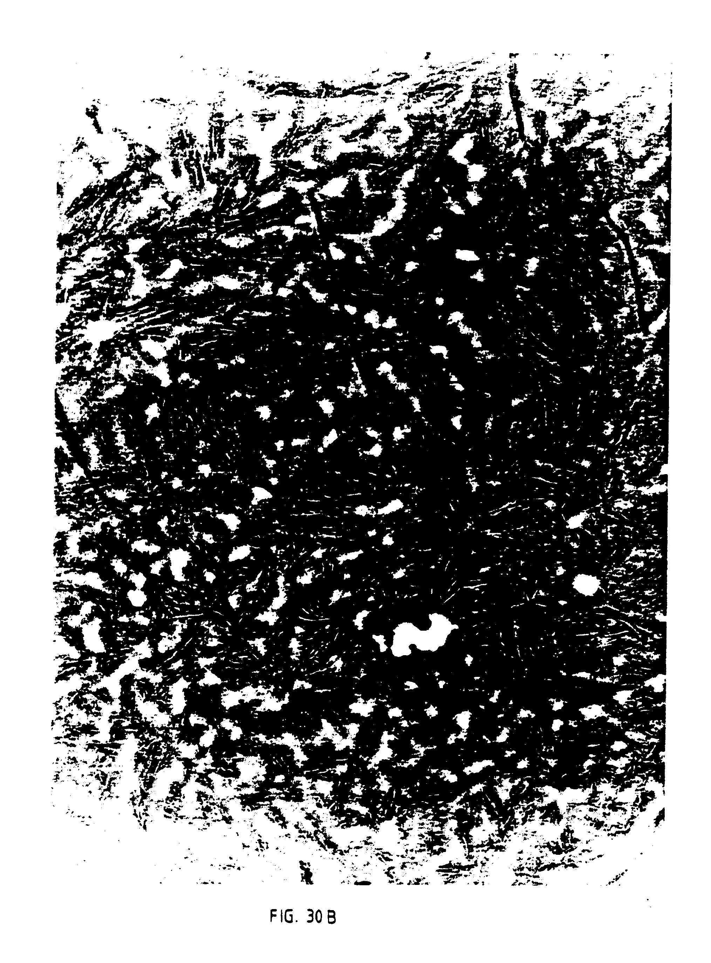

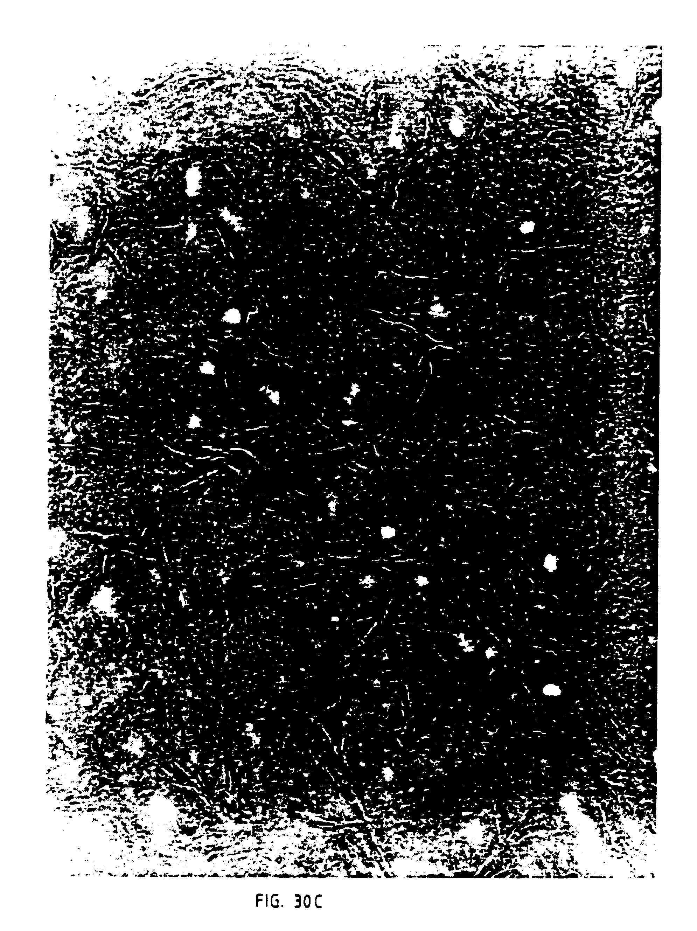

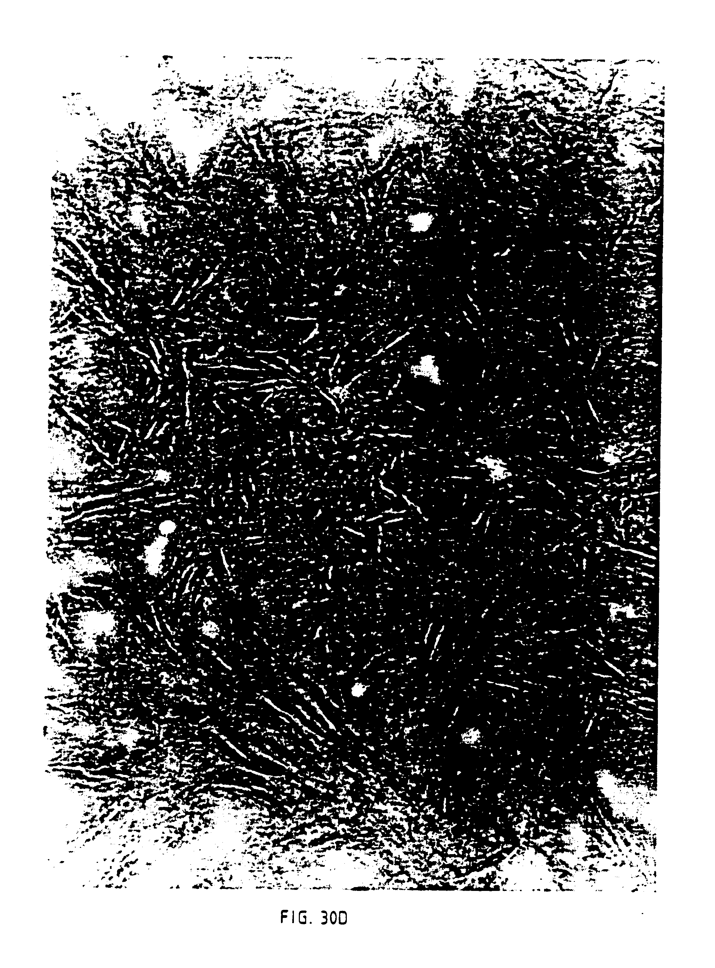

Fig. 30 is the ethylene-octene copolymer at magnifications of 20,000× (a), 41,000× (b), 70,000× (c) and 110,000× (d).

These pictures resemble the more amorphous "background" of the polymers according to the invention. There are no crystalline concentrations as in polymers according to the invention, but there are scattered lamellar structures with thin, short lamellae.

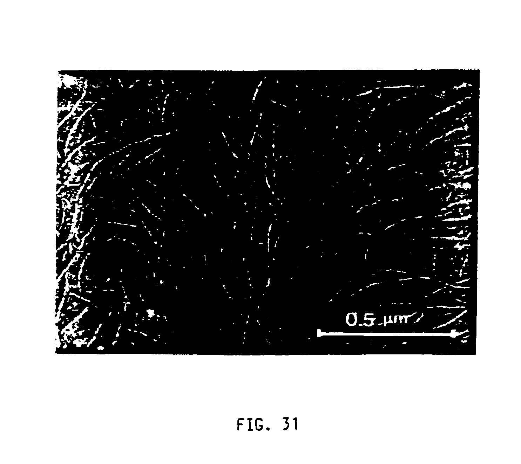

Fig. 31 shows the LLDPF at a magnification of 110,000×.

These pictures suggest that the polymers according to the invention contain LLDPE-like crystalline concentrations, connected by lamellae in an otherwise more amorphous matrix, which resembles the picture of the ethylene-octene copolymer of Fig.9.

Figs. 26 and 29 suggest that with a decreasing comonomer content the LLDPE-like domains change into a continuous phase. The results of electron microscopy suggest that this transition takes place at about 901 kg/m$^3$. Polymers with a density of 901, and in particular 900 kg/m$^3$ or less therefore are preferred.

## Claims

1. Polymer at least comprising:
   a) 80-95 mole % ethylene
   b) 5-20 mole % 1-alkene with 3 to 18 C atoms
   c) optionally one or more other monomers,
   with a density of at most 901 kg/m$^3$, at least two melting points, one of which is between (-4x + 100)¤C

and (-4x +130)ºC, but not above 100ºC, and a second one between (-x +120)ºC and 135ºC, and at least two crystallization points, one of which is between (-4x +90)ºC and (-4x +120)ºC, but not above 90ºC, and a second one between (-x +110)ºC and 125ºC, x being equal to the total mole percentage of comonomers b) and c), and with a $w^c$ of at least 3% at a temperature of (-3x +120)ºC and the $w^c$ at +23ºC being at most 0.77x the $w^c$ at -70ºC,

where:

$$w^c = \frac{h_a - h}{h_a - h_c} \cdot 100\%,$$

where $h_a$ represents the theoretical value of the specific enthalphy of 100% amorphous polyethylene, $h_c$ the theoretical value of the specific enthalpy of 100% crystalline polyethylene and h the specific enthalpy of the polymer.

**2.** Polymer according to claim 1, characterized in that the 1-alkene possesses 5 to 12 C atoms.

**3.** Polymer according to any one of claims 1-2, characterized in that the melt index is between 0.01 and 200 dg/min.

**4.** Polymer according to any one of claims 1-3, characterized in that it is prepared using a catalyst system comprising at least an organoaluminium compound, an organomagnesium compound, a titanium compound and an organic halide.

**5.** Polymer according to any one of claims 1-3, characterized in that it is prepared using a catalyst system comprising at least an organoaluminium compound, an organomagnesium compound, a titanium compound, a vanadium compound and an organic halide.

**6.** Mixture, comprising 1-99 wt. % of a polymer according to any one of claims 1-5 and 99-1 wt. % of one or more other polymers.

**7.** Mixture according to claim 6, characterized in that the other polymers are HDPE (high-density polyethylene, $d \geqq 940$ kg/m$^3$), LDPE (branched low-density polyethylene, 910 kg/m < d < 940 kg/m$^3$), LLDPE (linear low-density polyethylene, 910 kg/m$^3$ < d < 940 kg/m$^3$), propylene homo- and/or copolymer, ethylene-propylene copolymers, propylene-butene copolymers and/or ethylene-vinyl acetate copolymers.

**8.** Mixture according to claim 7, characterized in that LDPE is the other polymer.

**9.** Application of a polymer or a mixture according to any one of claims 1-8 as sealing layer.

**10.** Object made from a polymer or a mixture according to any one of claims 1-8.

**11.** Film, made from a polymer or a mixture according to any one of claims 1-8.

**Revendications**

**1.** Polymère comportant au moins :
    a) 80 à 95 moles % d'éthylène
    b) 5 à 20 moles % de 1-alcène avec 3 à 18 atomes de C
    c) éventuellement un ou plusieurs autres monomères,
avec une densité d'au plus 901 kg/m$^3$, au moins deux points de fusion, l'un d'eux étant entre (-4x 100)-ºC et (-4x +130)ºC, mais pas au-dessus de 100ºC, et un second entre (-x +120)ºC et 135ºC, et au moins deux points de cristallisation, l'un d'eux étant entre (-4x +90)ºC et (-4x +120)ºC, mais pas au-dessus de 90ºC, et un second entre (-x +110)ºC et 125ºC, x étant égal au pourcentage molaire total des comonomères b) et c), et avec un $w^c$ d'au moins 3% à une température de (-3x +120)ºC et le $w^c$

à +23°C étant au plus 0,77x le $w^c$ à -70°C, où

$$w^c = \frac{h_a - h}{h_a - h_c} \cdot 100\%,$$

où $h_a$ représente la valeur théorique de l'enthalpie spécifique du polyéthyléne 100% amorphe, $h_c$ la valeur théorique de l'enthalpie spécifique du polyéthylène 100% cristallin et h l'enthalpie spécifique du polymère.

2. Polymère selon la revendication 1, caractérisé en ce que le 1-alcène possède de 5 à 12 atomes de C.

3. Polymère selon l'une quelconque des revendications 1 ou 2, caractérisé en ce que l'indice de fusion (melt index) est entre 0,01 et 200 dg/min.

4. Polymère selon l'une quelconque des revendications 1 à 3, caractérisé en ce qu il est préparé en utilisant un système catalytique comportant au moins un composé organoaluminique, un composé organomagnésien, un composé du titane et un halogénure organique.

5. Polymère selon l'une quelconque des revendications 1 à 3, caractérisé en ce qu il est préparé en utilisant un système catalytique comportant au moins un composé organoaluminique, un composé organomagnésien, un composé du titane, un composé du vanadium et un halogénure organique.

6. Mélange comportant de 1 à 99 % en poids d'un polymère selon l'une quelconque des revendications 1 à 5 et de 99 à 1 % en poids d'un ou de plusieurs autres polymères.

7. Mélange selon la revendication 6, caractérisé en ce que les autres polymères sont le HDPE (polyéthylène haute densité, d $\geq$ 940 kg/m$^3$), le LDPE (polyéthylène basse densité ramifié, 910 kg/m$^3$ < d < 940 kg/m$^3$), le LLDPE (polyéthylène basse densité linéaire, 910 kg/m$^3$ < d < 940 kg/m$^3$), un homo et/ou copolymère de propylène, les copolymères éthylène-propylène, les copolymères propylène-butène et/ou les copolymères éthylène-acétate de vinyle.

8. Mélange selon la revendication 7, caractérisé en ce que le LDPE est l'autre polymère.

9. Application d'un polymère ou d'un mélange selon l'une quelconque des revendications 1 à 8 comme couche de scellage.

10. Objet fait à partir d'un polymère ou d'un mélange selon l'une quelconque des revendications 1 à 8.

11. Film, fait à partir d'un polymère ou d'un mélange selon l'une quelconque des revendications 1 à 8.

**Patentansprüche**

1. Polymer, umfassend mindestens:
   a) 80 bis 95 Mol% Ethylen,
   b) 5 bis 20 Mol% 1-Alken mit 3 bis 18 C-Atomen,
   c) gegebenenfalls ein oder mehrere andere Monomere,
   mit einer Dichte von höchstens 901 kg/m$^3$, mindestens zwei Schmelzpunkten, wobei einer zwischen (-4x +100)°C und (-4x +130)°C, jedoch nicht über 100°C, und ein zweiter zwischen (-x +120)°C und 135°C liegt, und mindestens zwei Kristallisationspunkten, wobei einer zwischen (-4x +90)°C und (-4x +120)°C, jedoch nicht über 90°C, und ein zweiter zwischen (-x +110)°C und 125°C liegt, wobei x gleich dem Gesamtmolprozentsatz an Comonomeren b) und c) ist, und mit einem $w^c$-Wert von mindestens 3 % bei einer Temperatur von (-3x +120)°C, wobei der $w^c$-Wert bei +23°C höchstens 0,77x des $w^c$-Wertes bei -70°C beträgt, worin:

$$w^c = \frac{h_a - h}{h_a - h_c} \cdot 100\%,$$

wobei $h_a$ den theoretischen Wert der spezifischen Enthalphie von 100 % amorphem Polyethylen, $h_c$ den theoretischen Wert der spezifischen Enthalpie von 100 % kristallinem Polyethylen und h die spezifische Enthalpie des Polymers darstellt.

2. Polymer nach Anspruch 1, dadurch gekennzeichnet, daß das 1-Alken 5 bis 12 C-Atome aufweist.

3. Polymer nach einem der Ansprüche 1 bis 2, dadurch gekennzeichnet, daß der Schmelzindex zwischen 0,01 und 200 dg/min beträgt.

4. Polymer nach einem der Ansprüche 1 bis 3, dadurch gekennzeichnet, daß es unter Verwendung eines Katalysatorsystems, umfassend mindestens eine Organoaluminiumverbindung, eine Organomagnesiumverbindung, eine Titanverbindung und ein organisches Halogenid, hergestellt wird.

5. Polymer nach einem der Ansprüche 1 bis 3, dadurch gekennzeichnet, daß es unter Verwendung eines Katalysatorsystems, umfassend mindestens eine Organoaluminiumverbindung, eine Organomagnesiumverbindung, eine Titanverbindung, eine Vanadiumverbindung und ein organisches Halogenid, hergestellt wird.

6. Mischung, die 1 bis 99 Gew.% eines Polymers nach einem der Ansprüche 1 bis 5 und 99 bis 1 Gew.% eines oder mehrerer anderer Polymere umfaßt.

7. Mischung nach Anspruch 6, dadurch gekennzeichnet, daß die anderen Polymere HDPE (Polyethylen mit hoher Dichte, $d \geq 940$ kg/m$^3$), LDPE (verzweigtes Polyethylen mit niedriger Dichte, $910$ kg/m$^3 < d < 940$ kg/m$^3$), LLDPE (lineares Polyethylen mit niedriger Dichte, $910$ kg/m$^3 < d < 940$ kg/m$^3$), Propylenhomo- und/oder -copolymer, Ethylen-Propylen-Copolymere, Propylen-Buten-Copolymere und/oder Ethylen-Vinylacetat-Copolymere sind.

8. Mischung nach Anspruch 7, dadurch gekennzeichnet, daß das andere Polymer LDPE ist.

9. Anwendung eines Polymers oder einer Mischung nach einem der Ansprüche 1 bis 8 als Sperrschicht.

10. Gegenstand, der aus einem Polymer oder einer Mischung nach einem der Ansprüche 1 bis 8 hergestellt ist.

11. Folie, die aus einem Polymer oder einer Mischung nach einem der Ansprüche 1 bis 8 hergestellt ist.

FIG. 1

FIG. 2

EP 0 286 177 B1

FIG. 3

FIG. 4

FIG. 5

FIG. 6

J/g/°C

J/g/°C

°C

EP 0 286 177 B1

FIG. 7

FIG.8

FIG. 9

J/g/°C

−60  −40  −20  0  20  40  60  80  100  120  140  160  180

°C

J/g/°C

FIG. 10

EP 0 286 177 B1

FIG. 11

EP 0 286 177 B1

FIG. 12

FIG 13a

EP 0 286 177 B1

EP 0 286 177 B1

FIG. 13b

FIG. 14

EP 0 286 177 B1

FIG 15

EP 0 286 177 B1

FIG. 16

FIG. 17

EP 0 286 177 B1

FIG. 18

FIG. 19

01mm152kV 189μm 6036/87 SE

FIG. 20A

10μm152kV 47μm 6037/87 SE

FIG. 20B

10μm152kV 24μm 6038/87 SE

FIG. 20C

FIG. 21 A

FIG. 21 B

FIG. 21 C

01mm150kV 189µm 6042/87 SE

FIG. 22A

10µm150kV 47µm 6043/87 SE

FIG. 22B

10µm150kV 24µm 6044/37 SE

FIG. 22C

FIG. 23A

FIG. 23B

FIG. 23C

FIG. 24 A

FIG. 24 B

FIG. 25 A

FIG. 25B

FIG. 26

FIG. 27

FIG. 28 A

FIG. 28 B

FIG. 28C

FIG. 28 D

FIG. 28E

FIG. 29 A

FIG 29B

FIG. 30 A

FIG. 30 B

FIG. 30C

FIG. 30D

FIG. 31